(19) Europäisches Patentamt
European Patent Office
Office européen des brevets

(11) EP 0 572 321 B1

(12) # FASCICULE DE BREVET EUROPEEN

(45) Date de publication et mention de la délivrance du brevet: **03.04.1996 Bulletin 1996/14**

(51) Int Cl.[6]: **G01V 1/36**, G01V 1/28

(21) Numéro de dépôt: **93401354.1**

(22) Date de dépôt: **27.05.1993**

(54) **Procédé de traitement de signaux pour prospection géophysique exploitant un opérateur d'extrapolation d'un champ d'onde perfectionné**

Verfahren zur Verarbeitung von Signalen für geophysikalische Prospektion wobei ein verbesserter Wellenfeld-Extrapolationsoperator verwendet wird

Signal processing process for geophysical exploration, using an improved wavefield extrapolation operator

(84) Etats contractants désignés:
**DE FR GB**

(30) Priorité: **29.05.1992 FR 9206564**

(43) Date de publication de la demande:
**01.12.1993 Bulletin 1993/48**

(73) Titulaire: **COMPAGNIE GENERALE DE GEOPHYSIQUE**
**F-91300 Massy (FR)**

(72) Inventeur: **Soubaras, Robert**
**F-91400 Orsay (FR)**

(74) Mandataire: **Martin, Jean-Jacques et al**
**Cabinet REGIMBEAU**
**26, Avenue Kléber**
**F-75116 Paris (FR)**

(56) Documents cités:

- **GEOPHYSICAL PROSPECTING vol. 37, no. 8, Novembre 1989, THE HAGUE NL pages 925 - 958 G. BLAQUIERE ET AL. '3-D table-driven migration'**
- **GEOPHYSICS. vol. 56, no. 11, Novembre 1991, TULSA US pages 1770 - 1777 D. HALE 'Stable explicit depth extrapolation of seismic wavefields'**
- **GEOPHYSICS. vol. 56, no. 11, Novembre 1991, TULSA US pages 1778 - 1785 D. HALE '3-D depth migration via McClellan transformations'**
- **PROCEEDINGS 7TH ANNUAL PRINCETON CONFERENCE ON INFORMATION SCIENCE AND SYSTEMS, 1973, PRINCETON, US pages 247 - 251 J. H. MCCLELLAN 'The design of two-dimensional digital filters and transformations.'**
- **GEOPHYSICS. vol. 37, no. 4, Août 1972, TULSA US pages 573 - 583 J. H. MCCLELLAN ET AL. 'Equiripple approximation of fan filters.'**
- **IEEE ACOUSTICS, SPEECH, AND SIGNAL PROCESSING MAGAZINE vol. 36, no. 2, Février 1988, NEW YORK US pages 252 - 264 IOANNIS PITAS ET AL. 'Baesian estimation in seismic migration'**
- **ICASSP 88: MULTIDIMENSIONAL PROCESSING. vol. II, 11 Avril 1988, NEW YORK, NY, USA pages 894 - 897 V. K. MADISETTI 'Seismic migration algorithms using the FFT approach on the Ncube multiprocessor'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1)Convention sur le brevet européen).

EP 0 572 321 B1

Printed by Jouve, 75001 PARIS (FR)

## Description

## DOMAINE TECHNIQUE DE L'INVENTION

La présente invention concerne le domaine de la prospection géophysique ou sismique.

## ETAT GENERAL DE LA TECHNIQUE

On sait que la prospection géophysique ou sismique, destinée à permettre l'étude de la structure interne de la terre, consiste fréquemment à enregistrer des ondes sismiques issues d'une source artificielle (explosif, générateur de vibrations, etc...) après leur réflexion et/ou leur réfraction dans le sous-sol.

Cette méthode de prospection est fondée sur la propriété qu'ont les ondes sonores provoquées par une source artificielle de subir des réfractions et des réflexions aux surfaces de contact de couches ayant des vitesses de transmission et des densités différentes, suivant des lois analogues à celles de l'optique.

Les systèmes utilisés pour la prospection géophysique comprennent donc généralement: une source artificielle d'une onde sonore ou ébranlement à base d'explosif ou équivalent, un réseau de capteurs, tels que des géophones ou équivalents, disposés sur la surface du sol et sensibles aux ondes réfléchies vers le haut par les couches internes du sol, un enregistreur relié à ces capteurs pour enregistrer les signaux électriques issus de ceux-ci, sous forme de sismogrammes, des moyens de traitement des signaux enregistrés et des moyens de visualisation d'un résultat exploitable après traitement de ces signaux.

Les moyens de traitement doivent effectuer un traitement assez complexe des signaux enregistrés, car ces signaux ne peuvent être utilisés directement pour visualiser les caractéristiques des couches analysées du sous-sol, du fait qu'ils sont pertubés.

Les perturbations de ces signaux sont assez bien connues de l'homme de l'art. Elles résultent en particulier du fait que chaque point lieu d'une variation d'impédance acoustique renvoie les ondes sonores incidentes dans une pluralité de directions, ce qui conduit donc non pas à un point unique, mais à une trace hyperbolique dans l'enregistrement, puisque chaque point diffractant est situé à des distances différentes des divers capteurs utilisés.

Pour éliminer cette perturbation, on utilise généralement une technique dite de migration qui focalise l'énergie diffractée et permet de donner une image claire du sous-sol, considéré comme un ensemble de sources secondaires. De nombreuses techniques de migration sont actuellement utilisées. Parmi les diverses techniques ainsi connues, la présente invention concerne plus précisément la catégorie des méthodes récursives basées sur l'extrapolation en profondeur (z) du champ d'onde enregistré en surface (z=0). Dans cette catégorie, les méthodes les plus couramment utilisées travaillent dans le domaine fréquence temporelle ($\omega$) et espace soit (x,z) dans le cas à deux dimensions (2D), et (x,y,z) dans le cas à trois dimensions (3D). On distingue encore les méthodes d'extrapolation implicites pour lesquelles le champ extrapolé s'obtient par résolution d'un système linéaire et les méthodes explicites pour lesquelles le champ extrapolé s'obtient par application d'un opérateur de convolution spatiale $F_0(\omega,c,x,y)$ suivant l'équation:

$$W_{\omega,z+dz}(x,y) = F_0(\omega,c,x,y) * W_{\omega,z}(x,y) \qquad (1)$$

où le signe * dénote la convolution en (x,y).

$W_{\omega,z}(x,y)$ s'obtient à partir de $W_{t,z}(x,y)$, qui est le champ d'onde à la profondeur z, par une transformation de Fourier sur la variable t. L'opérateur d'extrapolation $F_0(\omega,c,x,y)$ dépend de c qui est la vitesse de propagation locale des ondes dans le milieu.

Cette équation permet de façon récursive de calculer le champ d'onde $W_{\omega,z}(x,y)$, pour toutes les profondeurs z, à partir d'enregistrements de surface pour la profondeur z=0 fournissant $W_{\omega,z=0}(x,y)$.

Les méthodes implicites ont l'avantage d'être inconditionellement stables, mais elles conduisent à des imprécisions numériques croissantes avec les pendages des réflecteurs géologiques. Le "pendage" correspond à l'inclinaison des surfaces sensibles des capteurs par rapport à l'horizontale, soit à l'inclinaison de la propagation par rapport à la verticale. De plus les méthodes implicites se généralisent difficilement au cas 3D pour lequel on est conduit à utiliser une approximation anisotrope dite de "splitting" qui consiste à décomposer l'extrapolation en 2 étapes 2D suivant les directions x et y. Il en résulte une mauvaise image des réflecteurs dont le pendage n'est ni dans la direction x ni dans la direction y.

Les méthodes explicites ont l'avantage de se généraliser facilement au cas 3D. En revanche, le calcul des coefficients des opérateurs de convolution est délicat pour garantir stabilité et précision. Dans leur mise en oeuvre en général, les opérateurs sont calculés à l'avance dans une table en fonction d'un échantillonnage des paramètres de vitesse du sous-sol.

## NOTATIONS UTILISEES

Les données dépendant de (x,y) ne sont connues dans la pratique que sur une grille discrète de valeurs, correspondant en surface aux positions des capteurs. Les pas d'échantillonnages spatiaux en x et y sont Dx et Dy. $(\omega,k_x,k_y)$ = (fréquence, nombre d'onde en x, nombre d'onde en y) sont les variables correspondant à t,x,y par transformation de Fourier. $k_{nyqx}=\pi/Dx$ dénote le nombre d'onde de Nyquist pour le pas Dx, et $k_{nyqy}=\pi/Dy$ de même pour le pas Dy. Nous désignerons désormais le champ d'onde par $W_{\omega,z}(m_x,m_y)$, $m_x$ étant l'indice sur l'axe des x et $m_y$ l'indice sur l'axe des y, $W_{\omega,z}(m_x,m_y)$ désigne le champ échantillonné en (x,y) sur une grille de maillage Dx en coordonnée x et Dy en coordonnée y. Les indices $(m_x,m_y)$ correspondent donc à des coordonnées $(m_xDx,m_yDy)$. Le champ des vitesses de propagation à la profondeur z est noté $c_z(m_x,m_y)$.

L'opérateur d'extrapolation $F_0(\omega,c,x,y)$, d'un champ d'ondes montantes, d'une profondeur Dz pour une vitesse de propagation c et une fréquence ω, s'écrit dans le domaine $(k_x,k_y)$:

$$F_0(\omega,c,k_x,k_y) = \exp jDz(\omega^2/c^2-k_x^2-k_y^2)^{1/2} \qquad (2)$$

L'équation (1) s'écrivant dans le domaine $(k_x,k_y)$:

$$W_{\omega,z+dz}(k_x,k_y)=F_0(\omega,c,k_x,k_y)W_{\omega,z}(k_x,k_y) \qquad (3)$$

Pour appliquer la méthode à des ondes se propageant vers le bas, il suffit de prendre le conjugué de $F_0$.

Les méthodes explicites d'extrapolation en profondeur sont basées sur le fait que $F_0$ ne dépend pas de ω et de c séparément mais du rapport ω/c seulement. On peut donc écrire $F_0(\omega,c,k_x,k_y) = F_0(\omega/c,k_x,k_y)$.

## ETAT DE LA TECHNIQUE DANS LE DOMAINE DE L'EXTRAPOLATION 2D

Dans le cas de l'extrapolation à deux dimensions, l'opérateur d'extrapolation s'écrit:

$$F_0(\omega/c,k) = \exp jDz(\omega^2/c^2 - k^2)^{1/2}$$

Les méthodes explicites consistent à faire la synthèse spectrale de $F_0$, c'est-à-dire calculer une banque de coefficients a(ω/c,n) pour ω/c parcourant un échantillonnage de l'intervalle $[\omega_{min}/c_{max},\omega_{max}/c_{min}]$, où $[\omega_{min},\omega_{max}]$ représente le contenu fréquentiel des données et $[c_{min},c_{max}]$ les bornes des vitesses de propagation, et $n\in[0,N]$, tels que l'opérateur synthétisé:

$$F(\omega/c,k)= \sum_{n=0}^{n=N} a(\omega/c,n) \cos(nDx\ k)$$

approxime $F_o(\omega/c,k)$ pour $k\in[0,k_c=\omega\sin\theta/c]$, bande passante, et soit de module inférieur à 1 pour $k\in[k_c,k_{nyq}=\pi/Dx]$, bande d'arrêt. θ désigne le pendage géologique maximum correspondant à une propagation précise. $k_c=\omega\sin\theta/c$ est le nombre d'onde correspondant au ω/c donné et à un angle de propagation θ par rapport à la verticale. La contrainte sur le module est rendue nécessaire par le fait que ces opérateurs étant destinés à être appliqués récursivement, un module supérieur à 1 générerait une instabilité.

Il faut donc assurer la précision sur la bande passante et la stabilité sur la bande d'arrêt.

Holberg [1] utilise pour celà un procédé classique de moindres carrés non linéaire. Cette méthode entraine cependant un coût de calcul élevé.

Hale [2] propose un procédé plus rapide en calculant les coefficients a(n) qui égalent les premiers coefficients des développements en série de Taylor de F(k) et $F_0(k)$ en k. La stabilité est assurée en imposant à F(k) d'être nul pour certaines valeurs de k dans la bande d'arrêt. Cependant, une série de Taylor tronquée n'étant une bonne approximation que pour des faibles valeurs de k, donc pour de faibles pendages θ, cette méthode n'est pas optimale.

## ETAT DE LA TECHNIQUE DANS LE DOMAINE DE L'EXTRAPOLATION 3D

Dans le cas à 3 dimensions, l'opérateur d'extrapolation d'un champ d'ondes montantes, d'une profondeur Dz pour une vitesse de propagation c et une fréquence ω, est:

$$F_0(\omega/c,k_x,k_y) = \exp jDz(\omega^2/c^2 - k_x^2-k_y^2)^{1/2}$$

Dans la référence [3] Blaquière propose de réaliser l'extrapolation explicite 3D en généralisant le cas 2D, c'est-à-dire en faisant une synthèse spectrale 2D: une banque de coefficients $a(\omega/c,n_x,n_y)$ est calculée, pour ω/c parcourant un

échantillonnage de l'intervalle $[\omega_{min}/c_{max}, \omega_{max}/c_{min}]$, où $[\omega_{min}, \omega_{max}]$ représente le contenu fréquentiel des données et $[c_{min}, c_{max}]$ les bornes des vitesses de propagation, et $n_x \in [-N_x, N_x]$, $n_y \in [-N_y, N_y]$, tels que $F(\omega/c, k_x, k_y)$ définit ci-dessous:

$$F(\omega/c, k_x, k_y) = \sum_{n_x=-N_x}^{n_x=N_x} \sum_{n_y=-N_y}^{n_y=N_y} a(\omega/c, n_x, n_y) \exp[j(n_x Dx\ k_x + n_y Dy\ k_y)]$$

approxime $F_0(\omega/c, k_x, k_y)$ sur le disque $(k_x^2+k_y^2)^{1/2} \leq \omega \sin \theta/c$, et soit de module inférieur à 1 ailleurs. $\theta$ est le pendage géologique maximum qui correspond à une extrapolation précise. Ce paramètre est choisit par l'utilisateur.

Les $a(\omega/c, n_x, n_y)$ sont appliqués de la manière suivante

$$W_{\omega, z+dz}(m_x, m_y) = \sum_{n_x=-N_x}^{n_x=N_x} \sum_{n_y=-N_y}^{n_y=N_y} a[\omega/c_{z+dz}(m_x, m_y), n_x, n_y]\ W_{\omega, z}(m_x-n_x, m_y-n_y)$$

qui est la version en $(m_x, m_y)$ de l'équation:

$$W_{\omega, z+dz}(k_x, k_y) = F(\omega/c, k_x, k_y)\ W_{\omega, z}(k_x, k_y)$$

Hale, dans la référence [4], reprend l'idée de la tabulation précédente en tirant partie de surcroit de la symétrie circulaire en $(k_x, k_y)$ de $F_0(\omega/c, k_x, k_y)$. Il utilise pour celà les coefficients $a(\omega/c, n)$ à une dimension correspondant à une extrapolation 2-D et le processus de transformation proposé par McClellan dans la référence [5]. Hale écrit avec Dx=Dy:

$$F_0(\omega/c, k_x, k_y) = \exp jDz(\omega^2/c^2 - k^2)^{1/2}$$

avec $k = (k_x^2+k_y^2)^{1/2}$

et fait la synthèse spectrale:

$$F(\omega/c, kx, ky) = \sum_{n=0}^{n=N} a(\omega/c, n) \cos(nDx\ k)$$

Les $a(\omega/c, n)$ sont calculés de telle sorte que $F(\omega/c, k)$ approxime $F_0(\omega/c, k)$ pour les petites valeurs de k et soit partout de module inférieur à 1.

Les cos(nDx k) peuvent se déduire de cos(Dx k) par la formule récursive des polynômes de Chebychev:

$$\cos(nh) = 2\cos(h) \cos[(n-1)h] - \cos[(n-2)h]$$

où h=k Dx = longueur d'onde normalisée.

De plus cos(Dx k) peut être approximé par un filtre à deux dimensions pour les pas d'échantillonnage Dx et Dy:

$$\cos(Dx\ k) = \sum_{n_x=-N_{Mx}}^{n_x=N_{Mx}} \sum_{n_y=-N_{My}}^{n_y=N_{My}} M(n_x, n_y) \exp j(n_x Dx\ k_x + n_y Dy\ k_y)$$

Le développement le plus simple de cos(Dx k) est basé sur la transformée de McClellan à 9 termes, correspondant à $N_{Mx}=N_{My}=1$:

$$\cos(Dx\ k) = -1 + 0{,}5\ [1 + \cos(Dx\ k_x)]\ [1 + \cos(Dx\ k_y)]$$

Hale propose également d'exploiter une transformée de McClellan améliorée à 17 termes, correspondant à $N_{Mx}=N_{My}=2$ avec certains termes nuls. Mais, comme on le verra par la suite, même avec cette transformée améliorée, le résultat final comporte des pertubations.

Plus précisément, la méthode consiste donc à calculer les $a(\omega/c, n)$, $\omega/c$ parcourant un échantillonnage de l'intervalle $[\omega_{min}/c_{max}, \omega_{max}/c_{min}]$ et les $M(n_x, n_y)$.

Définissons l'opération W' = M*W par:

$$W_{\omega,z+dz}(m_x,m_y) = \sum_{n_x=-N_{Mx}}^{n_x=N_{Mx}} \sum_{n_y=-N_{My}}^{n_y=N_{My}} M(n_x,n_y)\ W_{\omega,z}(m_x-n_x,m_y-n_y)$$

Avec cette notation, le calcul du champ extrapolé $W_{\omega,z+dz}(m_x,m_y)$ à partir de $W_{\omega,z}(m_x,m_y)$ se fait, pour chaque $\omega$, par le pseudo-code suivant:

1) Initialisation :
$T_0 = W_z$
$T_1 = M*W_z$

$$W_{z+dz}\ (m_x,m_y)=b[\omega/c_{z+dz}(m_x,m_y),0]T_0(m_x,m_y)+$$

$$b[\omega/c_{z+dz}(m_x,m_y),1]T_1(m_x,m_y)$$

2) Itération, pour n=2 jusqu'à N faire:
$T = 2 * M * T_1 - T_0$

$$W_{z+dz}(m_x,m_y) = W_{z+dz}(m_x,m_y) + b[\omega/c_{z+dz}(m_x,m_y),n]\ T(m_x,m_y)$$

$T_0 = T_1$
$T_1 = T$
3) Fin de la boucle en n.

## BUT DE L'INVENTION

La présente invention a pour but de perfectionner les techniques existantes de traitement de signaux pour prospection géophysique exploitant un opérateur d'extrapolation d'un champ d'onde.

L'objet de l'invention est en particulier de faciliter le calcul des coefficients des opérateurs de convolution et de simplifier la construction et l'application des opérateurs en 3D.

## APPLICATIONS INDUSTRIELLES DE L'INVENTION

L'extrapolation du champ d'onde est nécessaire pour réaliser la migration, qui est une étape importante du traitement des données géophysiques. La présente invention peut être appliquée à la migration à 2 ou 3 dimensions, avant ou après sommation, à la migration en profondeur ainsi qu'à la migration en temps. Elle peut s'appliquer aussi à la modélisation, qui est l'opération inverse de la migration.

## EXPOSE GENERAL DE L'INVENTION

Pour atteindre le but précité il est proposé dans le cadre de la présente invention, un procédé d'extrapolation d'un ensemble de traces enregistrées à l'aide d'un réseau de capteurs, dans un processus de prospection géophysique,

caractérisé par le fait qu'il comprend les étapes consistant à :

i) approximer un moins Laplacien $L_0(k_x,k_y) = k_x{}^2+k_y{}^2$ par la somme de deux filtres à une dimension, et
ii) approximer un opérateur d'extrapolation $F_o$ par un polynome du moins Laplacien $L_o$.

Selon une caractéristique avantageuse de la présente invention, l'étape i) consiste à approximer le moins Laplacien par la somme de deux filtres à une dimension de la forme:

$$L = \sum_{n=0}^{n=N_{Lx}} d_x(n)\ \cos(nDx\ k_x) + \sum_{n=0}^{n=N_{Ly}} d_y(n)\ \cos(nDy\ k_y)$$

Selon une autre caractéristique avantageuse de la présente invention, à l'étape ii) l'opérateur d'extrapolation est approximé par un polynome du moins Laplacien de la forme :

$$F(\omega/c,k_x,k_y)=\sum_{n=0}^{n=N} p(\omega/c,n)\ L_0^n$$

Dans le cadre de la présente invention il est également proposé un système pour prospection géophysique du type comprenant :

- une source artificielle d'une onde sonore,
- un réseau de capteurs disposés sur la surface du sol et sensibles aux ondes réfléchies vers le haut par les couches internes du sol,
- un enregistreur relié à ces capteurs pour enregistrer les signaux électriques issus de ceux-ci,
- des moyens de traitement des signaux enregistrés et
- des moyens de visualisation d'un résultat exploitable après traitement de ces signaux,

  caractérisé par le fait que :

  les moyens de traitement sont adaptés pour décomposer un opérateur d'extrapolation en partie réelle et imaginaire, puis effectuer une synthèse optimale au sens de la norme L-∞ sur chacune des deux parties.

D'autres buts, caractéristiques et avantages de la présente invention apparaitront à la lecture de description détaillée qui va suivre et en regard des dessins annexés donnés à titre d'exemple non limitatif et sur lesquels:

- la figure 1 représente une vue schématique, sous forme de blocs fonctionnels, d'un système conforme à la présente invention,
- la figure 2a représente la partie réelle d'un filtre d'extrapolation conforme à la présente invention,
- la figure 2b représente le module maximal d'un tel filtre,
- la figure 2c représente la partie imaginaire du filtre d'extrapolation,
- la figure 2d représente le module effectif du filtre d'extrapolation conforme à la présente invention,
- la figure 3 représente la réponse impulsionnelle obtenue en 2 D dans le cadre de la présente invention,
- la figure 4 représente une réponse impulsionnelle 3-D avec utilisation d'un Laplacien à 17 termes conforme à la présente invention, pour une tranche verticale y=0,
- la figure 5 représente une réponse impulsionnelle 3-D avec utilisation d'un Laplacien à 17 termes conforme à la présente invention, pour une tranche horizontale z=450 m,
- la figure 6 représente une réponse impulsionnelle 3-D avec transformée de McClellan à 17 termes conforme à l'état de la technique , pour une tranche horizontale z=450 m.

**<u>STRUCTURE GENERALE DE L'INVENTION</u>**

La structure générale du système utilisé dans la présente invention est sensiblement conforme à la structure connue rappelée dans le préambule.

Ce système comprend une source artificielle 10 d'une onde sonore ou ébranlement à base d'explosif ou équivalent, un réseau de capteurs 20, tels que des géophones ou équivalents, disposés sur la surface S du sol et sensibles aux ondes réfléchies vers le haut par les couches internes du sol, un enregistreur 30 relié à ces capteurs 20 pour enregistrer les signaux électriques issus de ceux-ci, sous forme de sismogrammes, des moyens de traitement 40 des signaux enregistrés et des moyens 50 de visualisation d'un résultat exploitable après traitement de ces signaux.

La présente invention se distingue cependant de l'état de la technique par la structure et la fonction des moyens de traitement 40.

On va par la suite décrire la fonction de ces moyens de traitement 40 dans le cadre de la présente invention.

**<u>INVENTION DANS LE DOMAINE DE L'EXTRAPOLATION 2D</u>**

Comme indiqué précédemment selon l'invention, on propose d'effectuer la synthèse spectrale en décomposant $F_0(k)$ en partie réelle et imaginaire après une rotation de phase, puis d'effectuer une synthèse optimale au sens de la norme L-∞ sur chacune des deux parties.

Ces 2 synthèses optimales L-∞ peuvent être effectuées par exemple en utilisant le "Remez exchange algorithm" ou "algorithme de Remez", qui est décrit dans la référence [6], et qui résoud le problème suivant:

Soit $S_0(h)$ définit pour $h\in[0,\pi]$, un spectre réel symétrique donné.

Soit $W(h)$ définit pour $h\in[0,\pi]$, une fonction poids réelle positive donné.

Soit N la demi-longueur du filtre donnée.

$$S(h)=\sum_{n=0}^{n=N} a(n)\cos(nh)$$

est le spectre synthétisé.

$E(h)=W(h)[S(h)-S_0(h)]$ est la fonction d'erreur pondérée entre le spectre synthétisé et le spectre idéal donné.

Trouver les a(n), $n\in[0,N]$ tels que:

Norme L-∞ de E(h) = $\max_{h\in[0,\pi]} |E(h)|$ soit minimum.

Plus précisément, la procédure proposée par la présente inventon comprend les étapes qui consistent à:

i) Décomposer $F_0(k)\exp(j\phi_c)$ en parties réelles et imaginaires:

$$F_0(k)\exp(j\phi_c) = R_0(k) + jI_0(k)$$

$\phi_c$ est calculé de telle façon que $R_0(k)$ présente un maximum pour $k=k_c$. En l'occurence, $R_o(k_c)=1$ et $I_o(k_c)=0$.

ii) Par l'algorithme de Remez ou tout autre algorithme, calculer $a_r(n)$, $n\in[0,N]$, tels que:

$$R(k) = \sum_{n=0}^{n=N} a_r(n)\cos(nDx\ k)$$

corresponde au minimum de $\max_{k\in[0,kc]} |R(k)-R_0(k)|$, tout en imposant aux extrema de R(k) sur $[k_c,k_{nyq}]$ d'avoir des ordonnées $\pm\alpha$, où $\alpha$ est un nombre plus petit que 1. La figure 2a annexée représente la partie réelle d'un tel filtre d'extrapolation.

iii) Puis calculer la fonction de pondération W(k) pour $k\in[k_c,k_{nyq}]$:

$$W(k)=[M^2(k)-R^2(k)]^{-1/2}$$

où M(k) est le module maximum dans la bande $[k_c,k_{nyq}]$, définit par l'utilisateur. Le minimum de M(k) doit être supérieur à $\alpha$ et son maximum inférieur à 1. Un exemple d'une telle fonction est montré sur la figure 2b annexée.

iv) Par l'algorithme de Remez ou tout autre algorithme, calculer $a_i(n)$, $n\in[0,N]$, tels que:

$$I(k) = \sum_{n=0}^{n=N} a_i(n)\cos(nDx\ k)$$

corresponde au minimum de $\max_{k\in[0,kc]} |I(k)-I_0(k)|$, tout en imposant que $\max_{k\in[kc,knyq]} W(k)|I(k)|$ soit égal à 1. La figure 2c annexée représente la partie imaginaire d'un tel filtre d'extrapolation.

$F(k)=[R(k)+jI(k)]\ ]\exp(-j\phi_c)$ répond alors au problème posé. Les coefficients recherchés sont :

$$a(n) =[a_r(n)+ja_i(n)]\exp(-j\phi_c)$$

On a représenté sur la figure 2d annexée le module du filtre d'extrapolation.

La méthode de synthèse spectrale qui vient d'être décrite présente des avantages par rapport aux deux méthodes existantes.

L'une (référence [1]) est relativement optimale mais le calcul des coefficients est long, et l'optimalité l'est au sens de la norme L-2. Or, il est préférable que l'approximation en bande passante soit faite pour la norme L-∞, comme dans la méthode proposée En effet ces opérateurs doivent être utilisés de façon récursive. Minimiser l'erreur sur l'opérateur global $F^{p(k)}$, où p est le nombre de pas d'extrapolation en z, pour n'importe quelle norme, revient en effet à minimiser l'erreur sur l'opérateur unitaire pour la norme L-∞.

L'autre (référence [2]) est relativement rapide mais sous-optimale. Elle revient à minimiser l'erreur sur un intervalle local $k\in[0,\varepsilon]$ , avec k infiniment petit, alors que la méthode proposée minimise l'erreur sur tout l'intervalle $k\in[0,k_c=\omega \sin\theta/c]$, $\theta$ étant l'angle maximum de propagation exacte choisi par l'utilisateur, c'est-à-dire que l'erreur est minimisée pour tous les pendages inférieurs à un seuil fixé par l'utilisateur.

On a représenté sur la figure 3 la réponse impulsionnelle obtenue pour une plage de fréquence comprise entre $f_{min}$ = 2Hz et $f_{max}$ = 48Hz, une vitesse c = 2000 m/s et une cible à une profondeur z = 900m.

## INVENTION DANS LE DOMAINE DE L'EXTRAPOLATION 3D

Comme indiqué précédemment, l'un des buts importants de la présente invention est de simplifier le processus de calcul mis en oeuvre pour extrapoler le champ d'onde 3-D représenté par les traces enregistrées, et en améliorer la précision.

Ce but est atteint selon la présente invention grâce à un procédé d'extrapolation en profondeur d'un champ d'onde enregistré à l'aide d'un réseau de capteurs dans un processus de prospection géophysique comprenant les étapes qui consistent à mettre l'opérateur d'extrapolation sous la forme:

$$F_0(\omega/c,k_x,k_y) = \exp jDz(\omega^2/c^2-L_0)^{1/2}$$

dans lequel $L_0$ désigne le moins Laplacien:

$$L_0(k_x,k_y) = k_x^2+k_y^2.$$

Plus précisément selon l'invention le procédé d'extrapolation comprend les étapes qui consistent à :

i) approximer un moins Laplacien $L_0(k_x,k_y) = k_x^2+k_y^2$ par la somme de deux filtres à une dimension, et
ii) approximer un opérateur d'extrapolation $F_o$ par un polynome du moins Laplacien $L_o$.

Le moins Laplacien est de préférence approximé par la somme de deux filtres à une dimension de la forme:

$$L = \sum_{n=0}^{n=N_{Lx}} d_x(n) \cos(nDx\ k_x) + \sum_{n=0}^{n=N_{Ly}} d_y(n) \cos(nDy\ k_y)$$

Par ailleurs à l'étape ii) l'opérateur d'extrapolation est de préférence approximé par un polynome du moins Laplacien de la forme :

$$F(\omega/c,k_x,k_y) = \sum_{n=0}^{n=N} p(\omega/c,n)\ L_0^n$$

L'opérateur moins Laplacien $L_0$ peut être scindé, sans approximation, sous forme de la somme de deux opérateurs de moins dérivée seconde, chacun d'eux pouvant être approximé par un filtre à une dimension avec $N_{Lx}$ et $N_{Ly}$ termes en cosinus.

La présente invention exploite la symétrie circulaire de l'opérateur d'extrapolation, comme le propose Hale dans le cadre d'une mise en oeuvre de transformée de McClellan.

Cependant la présente invention permet d'éviter le calcul du filtre 2-D approximant $\cos[Dx(k_x^2+k_y^2)^{1/2}]$ grâce à l'utilisation d'un opérateur moins Laplacien, $L_0 = k_x^2 + k_y^2$, à l'aide duquel l'opérateur d'extrapolation $F_0$ est developpé sous la forme de polynome et dont la synthèse ne nécessite que des filtres 1-D.

Plus précisément, la procédure proposée dans le cadre de la présente invention comprend les étapes qui consistent à:

1) Faire une synthèse spectrale de l'opérateur moins dérivée seconde en x, c'est-à-dire calculer un filtre symétrique de longueur $2N_{Lx}+1$, pour le pas d'échantillonnage Dx, dont le spectre $D_x(k)$, définit par :

$$D_x(k) = \sum_{n=-N_{Lx}}^{n=N_{Lx}} d_x(n)\exp(j\ nDx\ k) \qquad \text{avec} \quad d_x(-n)=d_x(n)$$

approxime le spectre de la moins dérivée seconde $D_0(k)=k^2$, sur $k\in[0,\alpha_x k_{nyqx}]$, avec $0 < \alpha_x < 1$ ($\alpha_x$ est typiquement égal à 0,7). Aucune contrainte n'est imposée à $D_x(k)$ sur $k\in[\alpha_x k_{nyqx},k_{nyqx}]$ (lorsque $\alpha_x$ est petit, on peut éventuellement imposer à $D_x(k)$ de ne pas dépasser une certaine valeur).

2) Faire la même chose pour y:

$$D_y(k) = \sum_{n=-N_{Ly}}^{n=N_{Ly}} d_y(n) \exp(j\, nDy\, k) \qquad \text{avec} \quad d_y(-n)=d_y(n)$$

3) Définir $L(k_x,k_y) = D_x(k_x) + D_y(k_y)$ qui est la synthèse spectrale du moins Laplacien $L_0(k_x,k_y)=k_x^2+k_y^2$ sur le rectangle $k_x \in [-\alpha_x k_{nyqx}, \alpha_x k_{nyqx}]$, $k_y \in [-\alpha_y k_{nyqy}, \alpha_y k_{nyqy}]$.

En pratique, on calcule d'abord les $d_x(n)$, $d_y(n)$ (qui sont *a priori* indépendants de $\omega/c$ mais qui peuvent aussi en dépendre). Ensuite les bornes $[L_{min},L_{max}]$ de $L(k_x,k_y)$ sont calculées en tant que somme des bornes de $D_x(k)$ et de $D_y(k)$. On choisit $\theta$ qui est l'angle de propagation maximum considéré par rapport à la verticale. Pour une pulsation et une vitesse donnée, celà correspond à un nombre d'onde $k_c = \omega \sin\theta / c$. Puis pour chaque $\omega/c$ parcourant un échantillonnage de l'intervalle $[\omega_{min}/c_{max}, \omega_{max}/c_{min}]$, on calcule les $p(\omega/c,n)$, en tant que développement polynomial de $F_0(\omega/c,L)$. $F(\omega/c,L)$ doit approximer $F_0(\omega/c,L)$ pour $L \in [L_{min}, L_c=k_c^2=\omega^2\sin^2\theta/c^2]$ et doit être de module inférieur à 1 pour $L \in [L_c,L_{max}]$.

Définissons l'opération W'=L*W par:

$$W'(n_x,n_y) = \sum_{n=-N_{Lx}}^{n=N_{Lx}} d_x(n)\, W(n_x-n,n_y) + \sum_{n=-N_{Ly}}^{n=N_L} d_y(n)\, W(n_x,n_y-n)$$

W' approxime le moins Laplacien de W.

Avec cette notation, le calcul du champ extrapolé $W_{\omega,z+dz}(m_x,m_y)$ à partir de $W_{\omega,z}(m_x,m_y)$ se fait, pour chaque $\omega$, par le pseudo-code comprenant les étapes qui consistent à:

1) Initialiser:

$$W_{z+dz}(m_x,m_y) = p[\omega/c(m_x,m_y),N]\, W_z(m_x,m_y) \text{ puis}$$

2) Pour n=N-1 jusqu'à 0 faire:

$$W_{z+dz}(m_x,m_y) = (L*W_{z+dz})(m_x,m_y) + p[\omega/c(m_x,m_y),n]\, W_z(m_x,m_y)$$

On va maintenant préciser la méthode proposée dans le cadre de la présente invention pour calculer les coefficients en extrapolation 3D.

Nous avons vu comment ramener la synthèse de $F_0(\omega/c,k_x,k_y)$ à celle de coefficients 1-D: une synthèse polynomiale 1-D, $p(\omega/c,n)$, et deux synthèses spectrales 1-D de spectres réels symétriques, $d_x(n)$ et $d_y(n)$. Nous allons décrire une procédure de calcul pour ces coefficients.

Les synthèses de $d_x(n)$ et $d_y(n)$ peuvent se faire simplement en utilisant l'algorithme de Remez, avec $S_0(h)=h^2$, $W(h)=1$ pour $h \in [0,\alpha_x\pi]$, $W(h)=\varepsilon$ pour $h \in [\alpha_x\pi,\pi]$, où $\varepsilon$ est un petit nombre de l'ordre de 0,05.

On montre que la synthèse polynomiale peut se ramener à une synthèse spectrale. De plus celle-ci peut être opérée avec le procédé décrit précédemment pour l'extrapolation 2D.

La synthèse polynomiale à effectuer est la suivante:

Soit une fonction complexe $F_0(L)$ donnée, ainsi qu'un intervalle $[L_{min},L_{max}]$ et une valeur $L_c$. Il faut trouver des coefficients $p(n)$, $n \in [0,N]$, tels que:

$$F(L) = \sum_{n=0}^{n=N} p(n)\, L^n$$

soit

une approximation de $F_0(L)$ sur $[L_{min},L_c]$ et que le module de $F(L)$ soit inférieur à 1 sur $[L_c,L_{max}]$.

Faisons le changement de variable:

$$L=0{,}5(L_{min}-L_{max})\cos(h) + 0{,}5(L_{min}+L_{max})=g(h) \text{ avec } L \in [L_{min},L_{max}],\ h \in [0,\pi].$$

$F_0[g(h)] = S_0(h)$ est un spectre symétrique connu.

Posons $h_c = g^{-1}(L_c)$.

On résoud le problème de synthèse spectrale suivant, en utilisant par exemple la méthode proposée

précédemment :

Trouver les t(n), n∈[0,N], tels que

$$S(h) = \sum_{n=0}^{n=N} t(n) \cos(nh)$$

approxime $S_0(h)$ pour $h \in [0,h_c]$ et soit de module inférieur à 1 sur $[h_c,\pi]$.

Les t(n) définissants S(h) étant calculés, la méthode décrite dans la suite, $F(L)=S(g^{-1}(L))$ répond au problème posé.

En effet, le changement de variable L=g(h) transforme un polynôme de degré N en L en un polynôme de degré N en cos(h) et donc, d'après les polynômes de Chebychev, en une somme de cos(nh) pour n variant de 0 à N. Donc réciproquement, $h=g^{-1}(L)$, transforme un spectre de cosinus en un polynôme. De plus, la norme L-∞ est invariante par changement de variable. Donc si la synthèse spectrale est optimale pour la norme L-∞, la synthèse polynomiale le sera aussi.

Plus précisément, on peut écrire F(L) sous la forme:

$$F(L) = \sum_{n=0}^{n=N} t(n)\ T_n[(2L-L_{min}-L_{max})/(L_{min}-L_{max})] \quad (4)$$

$T_n(x)$ étant le polynôme de Chebychev de degré n définit par $T_n(\cos h) = \cos nh$.

On se ramène ensuite à la forme:

$$F(L)= \sum_{n=0}^{n=N} p(n)(AL/L_{max})^n \quad (5)$$

où A est un facteur d'échelle qui vaut typiquement 4. Le fait de développer en $(AL/L_{max})^n$ plutôt qu'en $L^n$ permet d'avoir des coefficients p(n) de moindre dynamique et donc d'avoir moins de problèmes numériques.

Le passage de la forme (4) à la forme (5) pour F(L) se fait en écrivant:

$$p(m) = \sum_{n=0}^{n=m} a(m,n)\ t(n)$$

où les a(m,n) sont définis par:

$$T_m[(2L-L_{min}-L_{max})/(L_{min}-L_{max})] = \sum_{n=0}^{n=m} a(m,n)\ (AL/L_{max})^n$$

Les a(m,n) se calculent récursivement en écrivant:

$$T_m(x) = 2x\ T_{m-1}(x) - T_{m-2}(x) \text{ avec}$$

$$x=(2L-L_{min}-L_{max}) / (L_{min}-L_{max})$$

Lorsque N est grand, il peut être impossible de trouver un A qui permette de ne pas avoir de problèmes de précision machine. Dans ce cas, il faut en rester à la forme en polynômes de Chebychev (4). Le pseudo-code de la méthode devient alors similaire à celui de la méthode de Hale, mais l'opérateur M, qui a une forme rectangulaire dans le domaine (x,y) est remplacé par l'opérateur $(2L-L_{min}-L_{max})/(L_{min}-L_{max})$ qui a une forme de croix dans le domaine (x,y).

Avec la forme (4) de F(L), le pseudo-code utilisé est le suivant :

1) initialiser :
$T_0=W_z$
$T_1=L^*W_z$,

$$W_{z+dz}(m_x,m_y) = t[\omega/c_{z+dz}(m_x,m_y),0]\ T_0(m_x,m_y) +$$

$$t[\omega/c_{z+dz}(m_x,m_y),1]\ T_1(m_x,m_y)$$

2) Pour n=2 jusqu'à N faire:
$T=2*L*T_1-T_0$

$$W_{z+dz}(m_x,m_y) = W_{z+dz}(m_x,m_y) + t[\omega/c_{z+dz}(m_x,m_y),n]\ T(m_x,m_y)$$

$T_0=T_1$
$T_1=T$
Fin de la boucle en n
avec W'=L*W définit par

$$W'(n_x,n_y) = \sum_{n=-N_{Lx}}^{n=N_{Lx}} [2d_x(n)/(L_{min}-L_{max}]\ W(n_x-n,n_y) + \sum_{n=-N_{Ly}}^{n=N_{Ly}} [2d_y(n)/(L_{min}-L_{max}]\ W(n_x,n_y-n) - (L_{min}+L_{max})W(n_x,n_y)/\ (L_{min}-L_{max}).$$

Avec la forme (5) de F(L), le pseudo-code utilisé est le suivant :

1) initialiser

$$W_{z+dz}(m_x,m_y) = p[\omega/c(m_x,m_y),N]\ W_z(m_x,m_y) \text{ puis}$$

2) Pour n=N-1 jusqu'à 0 faire:

$$W_{z+dz}(m_x,m_y) = (L*W_{z+dz})(m_x,m_y) + p[\omega/c(m_x,m_y),n]\ W_z(m_x,m_y)$$

avec W'=L*W définit par

$$W'(n_x,n_y) = \sum_{n=-N_{Lx}}^{n=N_{Lx}} [Ad_x(n)/L_{max}]\ W(n_x-n,n_y) + \sum_{n=-N_{Ly}}^{n=N_{Ly}} [Ad_y(n)/L_{max}]\ W(n_x,n_y-n).$$

## EXTENSION DE LA METHODE A L'EXTRAPOLATION 3D EN TEMPS

L'extrapolation en temps d'un champ d'onde permet de faire la migration en temps, avant ou après sommation, une étape souvent utilisée en traitement géophysique. La migration en temps est moins précise que la migration en profondeur, mais elle peut se contenter d'un modèle de vitesse $c_z(m_x,m_y)$ beaucoup moins précis, ce qui en fait l'utilité.

Contrairement aux méthodes de l'état de la technique précédemment décrites, la méthode proposée par la présente invention peut s'étendre au cas de l'extrapolation en temps. La fonction d'extrapolation en $k_x,k_y$ est dans ce cas, pour un pas d'extrapolation temporel Dt:

$$G_0(\omega,c,k_x,k_y)=\exp jDt(\omega^2-c^2L_0)^{1/2} \text{ avec } L_0(k_x,k_y)=k_x^2+k_y^2$$

$G_0(\omega,c)$ dépend cette fois-ci séparément de $\omega$ et de c et ne peut se mettre sous la forme $G_0(\omega/c)$. Une méthode basée sur la tabulation nécessiterait un filtre pour chaque $\omega$ et chaque c, ce qui serait prohibitif en temps de calcul et

en stockage.

La méthode proposée, utilisant un développement en monômes de la forme $L^n$, permet de ne tabuler les coefficients que pour la vitesse minimale $c_{min}$, et de déduire les coefficients correspondant à une vitesse c quelconque par une opération très simple qui peut être faite au moment de l'application.

On écrit:

$$G_0(\omega,c_{min},k_x,k_y)=\exp jDt(\omega^2-c_{min}^2L)^{1/2}\approx \sum_{n=0}^{n=N} p(\omega,c_{min},n)(AL/L_{max})^n=G(\omega,c_{min},k_x,k_y)$$

On précalcule et tabule les $p(\omega,c_{min},n)$ pour un échantillonnage de $\omega\in[\omega_{min},\omega_{max}]$. Pour une vitesse c quelconque, écrivons:

$$G_0(\omega,c,k_x,k_y) = \exp jDt(\omega^2-c^2L)^{1/2} \approx \sum_{n=0}^{n=N} p(\omega,c,n) \quad (AL/L_{max})^n = G(\omega,c,k_x,k_y)$$

$$G_0(\omega,c,k_x,k_y) = \exp jDt[\omega^2-c_{min}^2(Lc^2/c_{min}^2)]^{1/2} \approx \sum_{n=0}^{n=N} p(\omega,c_{min},n) \quad (c/c_{min})^{2n} \quad (AL/L_{max})^n = G(\omega,c,k_x,k_y)$$

Donc $p(\omega,c,n) = (c/c_{min})^{2n}p(\omega,c_{min},n)$ fournit une approximation de $G_0(\omega,c,k_x,k_y)$.

Les $p(\omega,c_{min},n)$ doivent être calculés sur $[L_{min}c_{max}^2/c_{min}^2, L_{max}c_{max}^2/c_{min}^2]$ au lieu de $[L_{min},L_{max}]$. De cette façon, la stabilité (le fait que le module ne soit jamais supérieur à 1), est assurée pour toutes les vitesses c et non pas seulement pour la vitesse tabulée. La tabulation se fait avec $L_c=\omega^2\sin^2\theta/c_{min}^2$, de sorte que cette valeur de $L_c$ est plus grande que les valeurs de $L_c$ nécessaires pour les autres vitesses. C'est la raison pour laquelle il faut tabuler pour $c_{min}$ plutôt que pour un $c_0$ arbitraire.

Si le rapport $c_{max}/c_{min}$ est trop grand, on peut tabuler pour 2 ou 3 valeurs de c: $c_{min},c_{int1},c_{int2},\ldots$, et se baser pour calculer $p(\omega,c,n)$ sur la valeur tabulée juste inférieure à c.

## AVANTAGES DE L'INVENTION

Le procédé conforme à la présente invention offre des avantages notables par rapport à la technique antérieure, en particulier par rapport au procédé proposé par Hale dans la référence [4].

Tout d'abord le procédé conforme à la présente invention, basé sur un développement polynomial et une synthèse spectrale de Laplacien, requiert seulement le calcul et l'application d'une banque de coefficients polynomiaux à une dimension $p(\omega/c,n)$ et de deux filtres symétriques à une dimension $d_x(n)$ et $d_y(n)$; alors que le procédé proposé par Hale, requiert le calcul et l'application d'une banque de filtres à une dimension $b(\omega/c,n)$ et d'un filtre à deux dimensions M $(n_x,n_y)$ (transformée de McClellan à 9 ou 17 termes par exemple). La méthode de la référence [3] requiert pour sa part le calcul et l'application d'une banque de filtres à deux dimensions $a(\omega/c,n_x,n_y)$ et est donc beaucoup plus lourde.

Par ailleurs, nous avons montré que le calcul d'un développement polynomial se ramène à celui d'un spectre symétrique. On peut donc utiliser pour le développement polynomial le même algorithme que pour le développement spectral. Les approximations polynomiales et spectrales ont alors une précision similaire, pour un nombre de termes identiques.

Enfin avec un nombre de termes identique, la synthèse spectrale du Laplacien donne une meilleure précision que la synthèse spectrale de la fonction $\cos[Dx(k_x^2+k_y^2)^{1/2}]$ dont la transformée de McClellan est un cas particulier. Avec la méthode proposée, n'ayant que des spectres symétriques à une dimension à calculer, nous pouvons utiliser des algorithmes optimaux et rapides. De plus, l'application d'un Laplacien, qui a une forme de croix dans le domaine (x,y) est plus rapide que l'application d'un $\cos[Dx(k_x^2+k_y^2)^{1/2}]$ , qui a une forme rectangulaire.

D'autre part, le cas $Dx \neq Dy$, qui est le plus courant en pratique, complique la méthode de Hale alors qu'elle ne pose aucun problème avec la méthode proposée.

Un autre avantage notable de la méthode proposée est que l'extrapolation en temps est possible avec une table à une dimension, alors qu'elle nécessiterait une table à deux dimensions avec les méthodes existantes (ce qui la rend non pratiquable).

La figure 4 représente une tranche verticale pour y=0 d'une réponse impulsionnelle correspondant à:

Dx=Dy=Dz=10m, c=1000m/s, $\theta$=60 degrés, $f_{min}$=2Hz, $f_{max}$=48Hz, z=900m, $N_{Lx}=N_{Ly}=4$ de sorte que le Laplacien comprend 17 coefficients. Le développement polynomial est de degré 15.

La figure 5 représente une tranche horizontale obtenue dans le cadre de la présente invention à l'aide d'un procédé mettant en oeuvre un développement polynomial à 15 termes et une synthèse de Laplacien à 17 termes, pour z=450m, soit un angle de 60 degrés.

La figure 6 représente une tranche horizontale obtenue à l'aide d'un procédé classique comprenant un développement spectral à 12 termes et une transformée de McClellan à 17 termes, pour la même profondeur z=450m. Le développement spectral à 12 termes est calculé par la méthode de synthèse spectrale par 2 optimisations L-$\infty$ décrite précédemment.

On peut noter que les perturbations visibles sur la figure 6, ne possèdent pas de symétrie circulaire. Il est donc clair qu'elles ne résultent pas d'une erreur dans le développement à 12 termes, mais nécessairement dans la transformée de McClellan à 17 termes.

**Références bibliographiques:**


[1] O. Holberg: Towards Optimum one-way Wave Propagation, Geophysical Prospecting, vol.36 n°2, pp. 99-114, Février 1988.

[2] D. Hale: Stable, Explicit Depth Extrapolation of Seismic Wavefields, Geophysics, vol.56 n°11, pp. 1770-1777, Novembre 1991.

[3] G. Blaquiere, H.W.J. Debeye, C.P.A. Wapenaar, A.J. Berkhout: 3-D table-driven Migration, Geophysical Prospecting, vol.37 n°8, pp. 925-958, Novembre 1989.

[4] D. Hale: 3-D Depth Migration via McClellan Transformations, Geophysics, vol.56 n°11, pp. 1778-1785, Novembre 1991.

[5] J.H. McClellan: The Design of Two-Dimensional Filters by Transformations, Proc. 7th Annual Princeton Conf. on Inform. Sci. and Syst., pp. 247-251,1973.

[6] J.H. McClellan, T.W. Parks: Equiripple Approximation of Fan Filters, Geophysics, vol.37 n°4, pp. 573-583, Août 1972.


## Revendications

1. Procédé d'extrapolation d'un ensemble de traces enregistrées à l'aide d'un réseau de capteurs, dans un processus de prospection géophysique,

   caractérisé par le fait qu'il comprend les étapes consistant à :

   i) approximer un moins Laplacien $L_0(k_x,k_y) = k_x^2+k_y^2$ par la somme de deux filtres à une dimension, et
   ii) approximer un opérateur d'extrapolation $F_o$ par un polynome du moins Laplacien $L_o$.

2. Procédé selon la revendication 1, caractérisé par le fait que l'étape i) consiste à approximer le moins Laplacien par la somme de deux filtres à une dimension de la forme:

$$L = \sum_{n=0}^{n=N_{Lx}} d_x(n) \quad \cos(nDx\ k_x) \quad + \sum_{n=0}^{n=N_{Ly}} d_y(n) \quad \cos(nDy\ k_y)$$

3. Procédé, selon l'une des revendications 1 ou 2, caractérisé par le fait qu'à l'étape ii) l'opérateur d'extrapolation est approximé par un polynome du moins Laplacien de la forme :

$$F(\omega/c, k_x, k_y) = \sum_{n=0.}^{n=N} p(\omega/c, n)\ L_0^n$$

**4.** Procédé selon l'une des revendications 1 ou 3, caractérisé par le fait que la synthèse du moins Laplacien consiste à :

1) Faire une synthèse spectrale de l'opérateur moins dérivée seconde en x, en calculant un filtre symétrique de longueur $2N_{Lx}+1$, pour le pas d'échantillonnage Dx, dont le spectre $D_x(k)$, définit par :

$$D_x(k) = \sum_{n=-N_{Lx}}^{n=N_{Lx}} d_x(n)\exp(j\ nDx\ k) \qquad \text{avec} \quad d_x(-n)=d_x(n)$$

approxime le spectre de la moins dérivée seconde $D_0(k)=k^2$, sur $k\in[0,\alpha_x k_{nyqx}]$, avec $0 < \alpha_x < 1$

2) Faire une synthèse spectrale de l'opérateur moins dérivée seconde en y, en calculant un filtre symétrique de longueur $2N_{Ly}+1$ pour le pas d'échantillonnage Dy, dont le spectre Dy(k), définit part :

$$D_y(k) = \sum_{n=-N_{Ly}}^{n=N_{Ly}} d_y(n)\ \exp(j\ nDy\ k) \qquad \text{avec} \quad d_y(-n)=d_y(n)$$

approxime le spectre de la moins dérivée seconde $Do(k) = k^2$ sur $k\in[0,\alpha_y k_{nyqx}]$ avec $0<\alpha_y<1$, et

3) Définir $L(k_x,k_y) = D_x(k_x) + D_y(k_y)$ qui est la synthèse spectrale du moins Laplacien $L_0(k_x,k_y)=k_x^2+k_y^2$ sur le rectangle $k_x\in[-\alpha_x k_{nyqx}, \alpha_x k_{nyqx}]$, $k_y\in[-\alpha_y k_{nyqy}, \alpha_y k_{nyqy}]$.

**5.** Procédé selon l'une des revendications 1 à 4, caractérisé par le fait que les synthèses des coefficients $d_x(n)$ et $d_y(n)$ du moins Laplacien sont effectuées en utilisant l'algorithme de Remez, avec $S_0(h)=h^2$, $W(h)=1$ pour $h\in[0,\alpha_x\pi]$, $W(h)=\varepsilon$ pour $h\in[\alpha_x\pi,\pi]$, où $\varepsilon$ est un petit nombre de l'ordre de 0,05.

**6.** Procédé selon l'une des revendications 1 à 5, caractérisé par le fait que la synthèse polynomiale de l'opérateur d'extrapolation est opérée sous forme d'une synthèse spectrale.

**7.** Procédé selon l'une des revendications 1 à 6, caractérisé par le fait que l'extrapolation en profondeur consiste à :

- calculer les coefficients $d_x(n)$, $d_y(n)$ du moins Laplacien,
- définir les bornes $[L_{min}, L_{max}]$ du moins Laplacien,
- pour chaque $\omega/c$ parcourant un échantillonnage de l'intervalle $[\omega_{min}/,c_{max}, \omega_{max}/c_{min}]$ calculer les coefficients $p(\omega/c, n)$ du développement polynomial de l'opérateur d'extrapolation $F_0(\omega/c, L)$.

**8.** Procédé selon l'une des revendications 1 à 7, caractérisé par le fait que l'extrapolation en profondeur consiste à :

1) initialiser

$$W_{z+dz}(m_x,m_y) = p(\omega/c(m_x,m_y),N]\ W_z(m_x,m_y) \text{ puis}$$

2) Pour n=N-1 jusqu'à 0 faire:

$$W_{z+dz}(m_x,m_y) = (L{*}W_{z+dz})(m_x,m_y) + p[\omega/c(m_x,m_y),n]\ W_z(m_x,m_y)$$

avec W'=L*W définit par

$$W'(n_x,n_y) = \sum_{n=-N_{Lx}}^{n=N_{Lx}} d_x(n)\ W(n_x-n,n_y) + \sum_{n=-N_{Ly}.}^{n=N_L} d_y(n)\ W(n_x,n_y-n)$$

**9.** Procédé selon l'une des revendications 1 à 8, caractérisé par le fait que la synthèse polynomiale de l'opérateur d'extrapolation est opérée sur la base des étapes consistant à :

- faire le changement de variable :

$$L=0,5(L_{min}-L_{max})\cos(h) + 0,5(L_{min}+L_{max})=g(h) \text{ avec } L\in[L_{min},L_{max}],\ h\in[0,\pi].$$

$F_0[g(h)] = S_0(h)$ étant un spectre symétrique connu.
- trouver les $t(n)$, $n\in[0,N]$, tels que

$$S(h) = \sum_{n=0}^{n=N} t(n)\cos(nh)$$

approxime $S_0(h)$ pour $h\in[0,h_c]$ et soit de module inférieur à 1 sur $[h_c,\pi]$, avec $h_c= g^{-1}(L_c)$,
- puis définir $F(L)=S(g^{-1}(L))$.

**10.** Procédé selon l'une des revendications 1 à 9, caractérisé par le fait qu'il comprend l'étape consistant à écrire l'opérateur d'extrapolaion sous la forme :

$$F(L) = \sum_{n=0}^{n=N} t(n)\ T_n[(2L-L_{min}-L_{max})/(L_{min}-L_{max})] \quad (4)$$

$T_n(x)$ étant le polynôme de Chebychev de degré n définit par $T_n(\cos h) = \cos nh$.

**11.** Procédé selon l'une des revendications 1 à 10, caractérisé par le fait qu'il comprend l'étape consistant à écrire l'opérateur d'extrapolation sous la forme :

$$F(L)= \sum_{n=0}^{n=N} p(n)(AL/L_{max})^n \quad (5)$$

où A est un facteur d'échelle qui vaut typiquement 4.

**12.** Procédé selon l'une des revendications 1 à 11, caractérisé par le fait que l'extrapolation en profondeur consiste à :

1) initialiser

$$W_{z+dz}(m_x,m_y) = p[\omega/c(m_x,m_y),N]\ W_z(m_x,m_y) \text{ puis}$$

2) Pour n=N-1 jusqu'à 0 faire:

$$W_{z+dz}(m_x,m_y) = (L^*W_{z+dz})(m_x,m_y) + p[\omega/c(m_x,m_y),n]\ W_z(m_x,m_y)$$

avec $W'=L^*W$ définit par

$$W'(n_x,n_y) = \sum_{n=-N_{Lx}}^{n=N_{Lx}} [Ad_x(n)/L_{max}]\ W(n_x-n,n_y) + \sum_{n=-N_{Ly}}^{n=N_{Ly}} [Ad_y(n)/L_{max}]\ W(n_x,n_y-n).$$

**13.** Procédé selon l'une des revendications 1 à 12, caractérisé par le fait que l'extrapolation en profondeur consiste à :

1) initialiser :
$T_0=W_z$
$T_1=L*W_2$

$$W_{z+dz}(m_x,m_y) = t[\omega/c_{z+dz}(m_x,m_y),0]\ T_0(m_x,m_y) + t[\omega/c_{z+dz}(m_x,m_y),1]\ T_1(m_x,m_y)$$

2) Pour n=2 jusqu'à N faire:
$T=2*L*T_1-T_0$

$$W_{z+dz}(m_x,m_y) = W_{z+dz}(m_x,m_y) + t[\omega/c_{z+dz}(m_x,m_y),n]\ T(m_x,m_y)$$

$T_0=T_1$
$T_1=T$
Fin de la boucle en n
avec W'=L*W définit par

$$W'(n_x,n_y) = \sum_{n=-N_{Lx}}^{n=N_{Lx}} [2d_x(n)/(L_{min}-L_{max}]\ W(n_x-n,n_y) + \sum_{n=-N_{Ly}}^{n=N_{Ly}} [2d_y(n)/(L_{min}-L_{max}]\ W(n_x,n_y-n) - (L_{min}+L_{max})W(n_x,n_y)/\ (L_{min}-L_{max}).$$

**14.** Procédé selon l'une des revendications 1 à 13, caractérisé par le fait qu'il comprend en outre une phase d'extrapolation 3D en temps sur la base de la fonction d'extrapolation qui s'écrit pour un pas d'extrapolation temporel Dt :

$$G_0(\omega,c,k_x,k_y)=\exp jDt\ (\omega^2-c^2L_0)^{1/2} \text{ avec } L_0(k_x,k_y)=k_x^2+k_y^2$$

laquelle phase d'extrapolation 3D en temps consiste à :

- tabuler les cofficients $p(\omega, c_{min}, n)$ du développement polynomial pour au moins une valeur de vitesse déterminée ($C_{min}$), et
- calculer les autres coefficients requis $p(\omega, c, n)$ par multiplications des coefficients tabulés par $(c/c_{min})^{2n}$, soit

$$p(\omega,c,n) = (c/c_{min})^{2n} p(\omega,c_{min},n).$$

**15.** Procédé selon l'une des revendications 1 à 14, caractérisé par le fait qu'il comprend l'étape consistant à décomposer un opérateur d'extrapolation (20) en partie réelle et imaginaire, puis effectuer une synthèse optimale au sens de la norme L-∞ sur chacune des deux parties.

**16.** Procédé selon la revendication 15, caractérisé par le fait que la synthèse optimale L-∞ sur la partie réelle et la partie imaginaire de l'opérateur d'extrapolation est effectuée à l'aide de l'algorithme de Remez.

**17.** Procédé selon l'une des revendications 15 ou 16, caractérisé par le fait que la synthèse optimale de la partie réelle et de la partie imaginaire de l'opérateur d'extrapolation consiste à rechercher les a(n), $n\in[0,N]$ du spectre synthétisé :

$$S(h) = \sum_{n=0}^{n=N} a(n)\ \cos(nh)$$

tels que
Norme L-∞ de $E(h) = \max_{h\in[0,\pi]} |E(h)|$ soit minimum, avec :
$S_0$ définissant pour $h\in[0,\pi]$, un spectre réel symétrique donné,
W(h) définissant pour $h\in[0,\pi]$, une fonction poids réelle positive donné,
N étant la demi-longueur du filtre donnée, et

$E(h)=W(h)[S(h)-S_0(h)]$ étant la fonction d'erreur pondérée entre le spectre synthétisé et le spectre idéal donné.

**18.** Procédé selon l'une des revendications 15 à 17, caractérisé par le fait que l'opérateur d'extrapolation est synthétisé à l'aide des étapes consistant à :

i) Décomposer l'opérateur d'extrapolation $F_0(k)\ \exp(j\phi_c)$ en parties réelles et imaginaires:

$$F_0(k)\ \exp(j\phi_c) = R_0(k) + jI_0(k),$$

$\phi_c$ étant calculé de telle façon que $R_0(k)$ présente un maximum pour $k=k_c$,

ii) calculer $a_r(n)$, $n\in[0,N]$, tels que:

$$R(k) = \sum_{n=0}^{n=N} a_r(n)\ \cos(nDx\ k)$$

corresponde au minimum de $\max_{k\in[0,kc]} |R(k)-R_0(k)|$, tout en imposant aux extrema de R(k) sur $[k_c,k_{nyq}]$ d'avoir des ordonnées $\pm\alpha$, où $\alpha$ est un nombre plus petit que 1,

iii) calculer la fonction de pondération W(k) pour $k\in[k_c,k_{nyq}]$:

$$W(k)=[M^2(k)-R^2(k)]^{-1/2}$$

où M(k) est le module maximum dans la bande $[k_c,k_{nyq}]$, définit par l'utilisateur,

iv) calculer $a_i(n)$, $n\in[0,N]$, tels que :

$$I(k) = \sum_{n=0}^{n=N} a_i(n)\ \cos(nDx\ k)$$

corresponde au minimum de $\max_{k\in[0,kc]} |I(k)-I_0(k)|$, tout en imposant que $\max_{k\in(kc,knyq]} W(k)|I(k)|$ soit égal à 1,

v) définir l'opérateur d'extrapolation par sommation des synthèses obtenues aux étapes ii) et iv), soit,

$$F(k)=[R(k)+jI(k)]\ \exp(-j\phi_c)$$

les coefficients recherchés de l'opérateur étant :

$$a(n) =[a_r(n)+ja_i(n)]\ \exp(-j\phi_c)$$

**19.** Procédé selon l'une des revendications 15 à 18, caractérisé par le fait qu'à l'étape i) on impose : $R_0(k_c)=1$ et $I_0(k_c)=0$.

**20.** Procédé selon l'une des revendications 15 à 19, caractérisé par le fait qu'à l'étape iii) on impose que le minimum de M(k) soit supérieur à $\alpha$ et que son maximum soit inférieur à 1.

**21.** Système pour prospection géophysique du type comprenant :

- une source artificielle (10) d'une onde sonore,
- un réseau de capteurs (20) disposés sur la surface du sol et sensibles aux ondes réfléchies vers le haut par les couches internes du sol,
- un enregistreur (30) relié à ces capteurs pour enregistrer les signaux électriques issus de ceux-ci,
- des moyens (40) de traitement des signaux enregistrés et
- des moyens (50) de visualisation d'un résultat exploitable après traitement de ces signaux,

caractérisé par le fait que les moyens de traitement (40) sont adaptés pour décomposer un opérateur d'extrapolation (20) en partie réelle et imaginaire, puis effectuer une synthèse optimale au sens de la norme L-∞ sur chacune des deux parties.

**22.** Système selon la revendication 21, caractérisé par le fait que les moyens de traitement (40) effectuent la synthèse optimale L-∞ sur la partie réelle et la partie imaginaire de l'opérateur d'extrapolation à l'aide de l'algorithme de Remez.

**23.** Système selon l'une des revendications 21 ou 22, caractérisé par le fait que les moyens de traitement (40) effectuent la synthèse optimale de la partie réelle et de la partie imaginaire de l'opérateur d'extrapolation en recherchant les a(n), $n \in [0,N]$ du spectre synthétisé :

$$S(h)= \sum_{n=0}^{n=N} a(n) \cos(nh)$$

tels que
Norme L-∞ de E(h) = $\max_{h \in [0,\pi]} |E(h)|$ soit minimum, avec :
$S_0$ définissant pour $h \in [0,\pi]$, un spectre réel symétrique donné,
W(h) définissant pour $h \in [0,\pi]$, une fonction poids réelle positive donné,
N étant la demi-longueur du filtre donnée, et
$E(h)=W(h)[S(h)-S_0(h)]$ étant la fonction d'erreur pondérée entre le spectre synthétisé et le spectre idéal donné.

**24.** Système selon l'une des revendications 21 à 23, caractérisé par le fait que les moyens de traitement (40) synthétisent l'opérateur d'extrapolation à l'aide des étapes consistant à :

i) Décomposer l'opérateur d'extrapolation $F_0(k)\exp(j\phi_c)$ en parties réelles et imaginaires:

$$F_0(k)\exp(j\phi_c) = R_0(k) + jI_0(k),$$

$\phi_c$ étant calculé de telle façon que $R_0(k)$ présente un maximum pour $k=k_c$,
ii) calculer $a_r(n)$, $n \in [0,N]$, tels que:

$$R(k) = \sum_{n=0}^{n=N} a_r(n) \cos(nDx\ k)$$

corresponde au minimum de $\max_{k \in [0,kc]} |R(k)-R_0(k)|$, tout en imposant aux extrema de R(k) sur $[k_c,k_{nyq}]$ d'avoir des ordonnées $\pm\alpha$, où $\alpha$ est un nombre plus petit que 1,
iii) calculer la fonction de pondération W(k) pour $k \in [kc,k_{nyq}]$:

$$W(k)=[M^2(k)-R^2(k)]^{-1/2}$$

où M(k) est le module maximum dans la bande $[k_c,k_{nyq}]$, définit par l'utilisateur,
iv) calculer $a_i(n)$, $n \in [0,N]$, tels que :

$$I(k) = \sum_{n=0}^{n=N} a_i(n) \cos(nDx\ k)$$

corresponde au minimum de $\max_{k \in [0,kc]} |I(k)-I_0(k)|$, tout en imposant que $\max_{k \in [kc,knyq]} W(k)|I(k)|$ soit égal à 1,
v) définir l'opérateur d'extrapolation par sommation des synthèses obtenues aux étapes ii) et iv), soit,

$$F(k)=[R(k)+jI(k)]\exp(-j\phi_c)$$

les coefficients recherchés de l'opérateur étant :

$$a(n)=[a_r(n)+ja_i(n)]\exp(-j\phi_c)$$

**25.** Système selon l'une des revendications 21 à 24, caractérisé par le fait qu'à l'étape i) les moyens de traitement (40) imposent :
$R_0(k_c)=1$ et $I_0(k_c)=0$.

**26.** Système selon l'une des revendications 21 à 25, caractérisé par le fait qu'à l'étape iii) les moyens de traitement (40) imposent que le minimum de M(k) soit supérieur à $\alpha$ et que son maximum soit inférieur à 1.

**27.** Système selon l'une des revendications 21 à 26 caractérisé par le fait que les moyens de traitement (40) sont adaptés pour:

i) approximer un moins Laplacien $L_0(k_x,k_y) = k_x^2+k_y^2$ par la somme de deux filtres à une dimension, et
ii) approximer un opérateur d'extrapolation $F_o$ par un polynome du moins Laplacien $L_o$.

**28.** Système selon la revendication 27, caractérisé par le fait que à l'étape i) les moyens de traitement (40) approximent le moins Laplacien par la somme de deux filtres à une dimension de la forme:

$$L = \sum_{n=0}^{n=N_{Lx}} d_x(n) \cos(nDx\ k_x) + \sum_{n=0}^{n=N_{Ly}} d_y(n) \cos(nDy\ k_y).$$

**29.** Système selon l'une des revendications 27 ou 28, caractérisé par le fait que à l'étape ii) les moyens de traitement (40) approximent l'opérateur d'extrapolation par un polynome du moins Laplacien de la forme :

$$F(\omega/c,k_x,k_y) = \sum_{n=0}^{n=N} p(\omega/c,n)\ L_0^n.$$

**30.** Système selon l'une des revendications 21 à 29, caractérisé par le fait que pour la synthèse du moins Laplacien les moyens de traitement sont adaptés pour :

1) Faire une synthèse spectrale de l'opérateur moins dérivée seconde en x, en calculant un filtre symétrique de longueur $2N_{Lx}+1$, pour le pas d'échantillonnage Dx, dont le spectre $D_x(k)$, définit par :

$$D_x(k) = \sum_{n=-N_{Lx}}^{n=N_{Lx}} d_x(n)\exp(j\ nDx\ k) \qquad \text{avec} \quad d_x(-n)=d_x(n)$$

avec $d_x(-n)=d_x(n)$
approxime le spectre de la moins dérivée seconde $D_0(k)=k^2$, sur $k\in[0,\alpha_x k_{nyqx}]$, avec $0 < \alpha_x < 1$
2) Faire une synthèse spectrale de l'opérateur moins dérivée seconde en y, en calculant un filtre symétrique de longueur $2N_{Ly}+1$ pour le pas d'échantillonnage Dy, dont le spectre Dy(k), définit part :

$$D_y(k) = \sum_{n=-N_{Ly}}^{n=N_{Ly}} d_y(n)\ \exp(j\ nDy\ k) \qquad \text{avec} \quad d_y(-n)=d_y(n)$$

approxime le spectre de la moins dérivée seconde $Do(k) = k^2$ sur $k\in[0,\alpha_y k_{nyqx}]$ avec $0<\alpha_y<1$, et
3) Définir $L(k_x,k_y) = D_x(k_x) + D_y(k_y)$ qui est la synthèse spectrale du moins Laplacien $L_0(k_x,k_y)=k_x^2+k_y^2$ sur le rectangle $k_x\in[-\alpha_x k_{nyqx},\alpha_x k_{nyqx}]$, $k_y\in[-\alpha_y k_{nyqy},\alpha_y k_{nyqy}]$.

**31.** Système selon l'une des revendications 21 à 30, caractérisé par le fait que les synthèses des coefficients $d_x(n)$ et $d_y(n)$ du moins Laplacien sont effectuées par les moyens de traitement (40) en utilisant l'algorithme de Remez, avec $S_0(h)=h^2$, $W(h)=1$ pour $h\in[0,\alpha_x\pi]$, $W(h)=\varepsilon$ pour $h\in[\alpha_x\pi,\pi]$, où $\varepsilon$ est un petit nombre de l'ordre de 0,05.

**32.** Système selon l'une des revendications 21 à 31, caractérisé par le fait que la synthèse polynomiale de l'opérateur d'extrapolation est opérée par les moyens de traitement (40) sous forme d'une synthèse spectrale.

**33.** Système selon l'une des revendications 21 à 32, caractérisé par le fait que les moyens de traitement (40) opèrent l'extrapolation en profondeur à l'aide des étapes qui consistent à :

- calculer les coefficients $d_x(n)$, $d_y(n)$ du moins Laplacien,
- définir les bornes $[L_{min}, L_{max}]$ du moins Laplacien,

- pour chaque $\omega/c$ parcourant un échantillonnage de l'intervalle $[\omega_{min}/c_{max}, \omega_{max}/c_{min}]$ calculer les coefficients p ($\omega$/c, n) du développement polynomial de l'opérateur d'extrapolation $F_0$ ($\omega$/c, L).

**34.** Système selon l'une des revendications 21 à 33, caractérisé par le fait que pour l'extrapolation en profondeur les moyens de traitement (40) sont adaptés pour

1) initialiser

$$W_{z+dz}(m_x,m_y) = p[\omega/c(m_x,m_y),N]\ W_z(m_x,m_y) \text{ puis}$$

2) Pour n=N-1 jusqu'à 0 faire:

$$W_{z+dz}(m_x,m_y) = (L^*W_{z+dz})(m_x,m_y) + p[\omega/c(m_x,m_y),n]\ W_z(m_x,m_y)$$

avec W'=L*W définit par

$$W'(n_x,n_y) = \sum_{n=-N_{Lx}}^{n=N_{Lx}} d_x(n)\ W(n_x-n,n_y) + \sum_{n=-N_{Ly}}^{n=N_L} d_y(n)\ W(n_x,n_y-n).$$

**35.** Système selon l'une des revendications 21 à 34, caractérisé par le fait que la synthèse polynomiale de l'opérateur d'extrapolation est opérée par les moyens de traitement (40) sur la base des étapes consistant à :

- faire le changement de variable :

$$L=0,5(L_{min}-L_{max})\cos(h) + 0,5(L_{min}+L_{max})=g(h) \text{ avec } L\in[L_{min},L_{max}],\ h\in[0,\pi].$$

$F_0[g(h)] = S_0(h)$ étant un spectre symétrique connu.

- trouver les t(n), $n\in[0,N]$, tels que

$$S(h) = \sum_{n=0}^{n=N} t(n)\cos(nh)$$

approxime $S_0(h)$ pour $h\in[0,h_c]$ et soit de module inférieur à 1 sur $[h_c,\pi]$, avec $h_c = g^{-1}(L_c)$,

- puis définir $F(L)=S(g^{-1}(L))$.

**36.** Système selon l'une des revendications 21 à 35, caractérisé par le fait que les moyens de traitement (40) écrivent l'opérateur d'extrapolaion sous la forme :

$$F(L) = \sum_{n=0}^{n=N} t(n)\ T_n[(2L-L_{min}-L_{max})/(L_{min}-L_{max})] \quad (4)$$

$T_n(x)$ étant le polynôme de Chebychev de degré n définit par $T_n(\cos h) = \cos nh$.

**37.** Système selon l'une des revendications 21 à 36, caractérisé par le fait que les moyens de traitement (40) écrivent l'opérateur d'extrapolation sous la forme :

$$F(L) = \sum_{n=0}^{n=N} p(n)(AL/L_{max})^n \quad (5)$$

où A est un facteur d'échelle qui vaut typiquement 4.

**38.** Système selon l'une des revendications 21 à 37, caractérisé par le fait que pour l'extrapolation en profondeur les moyens de traitement (40) sont adaptés pour :

1) initialiser

$$W_{z+dz}(m_x,m_y) = p[\omega/c(m_x,m_y),N]\ W_z(m_x,m_y) \text{ puis}$$

2) Pour n=N-1 jusqu'à 0 faire:

$$W_{z+dz}(m_x,m_y) = (L^*W_{z+dz})(m_x,m_y) + p[\omega/c(m_x,m_y),n]\ W_z(m_x,m_y)$$

avec W'=L*W définit par

$$W'(n_x,n_y) = \sum_{n=-N_{Lx}}^{n=N_{Lx}} [Ad_x(n)/L_{max}]\ W(n_x-n,n_y) + \sum_{n=-N_{Ly}}^{n=N_{Ly}} [Ad_y(n)/L_{max}]\ W(n_x,n_y-n).$$

**39.** Système selon l'une des revendications 21 à 38, caractérisé par le fait que pour l'extrapolation en profondeur les moyens de traitement (40) sont adaptés pour:

1) initialiser :
$T_0=W_z$
$T_1=L^*W_z$

$$W_{z+dz}(m_x,m_y) = t[\omega/c_{z+dz}(m_x,m_y),0]\ T_0(m_x,m_y) + t[\omega/c_{z+dz}(m_x,m_y),1]\ T_1(m_x,m_y)$$

2) Pour n=2 jusqu'à N faire:
$T=2^*L^*T_1-T_0$

$$W_{z+dz}(m_x,m_y) = W_{z+dz}(m_x,m_y) + t[\omega/c_{z+dz}(m_x,m_y),n]\ T(m_x,m_y)$$

$T_0=T_1$
$T_1=T$
Fin de la boucle en n
avec W'=L*W définit par

$$W'(n_x,n_y) = \sum_{n=-N_{Lx}}^{n=N_{Lx}} [2d_x(n)/(L_{min}-L_{max}]\ W(n_x-n,n_y) + \sum_{n=-N_{Ly}}^{n=N_{Ly}} [2d_y(n)/(L_{min}-L_{max}]\ W(n_x,n_y-n)$$

$$- (L_{min}+L_{max})W(n_x,n_y)/\ (L_{min}-L_{max}).$$

**40.** Système selon l'une des revendications 21 à 39, caractérisé par le fait que les moyens de traitement (40) sont adaptés pour opérer une phase d'extrapolation 3D en temps sur la base de la fonction d'extrapolation qui s'écrit pour un pas d'extrapolation temporel Dt :

$$G_0(\omega,c,k_x,k_y) = \exp jDt(\omega^2-c^2L_0)^{1/2} \text{ avec } L_0(k_x,k_y)=k_x^2+k_y^2$$

grâce aux étapes qui consistent à :

- tabuler les cofficients $p(\omega, c_{min}, n)$ du développement polynomial pur au moins une valeur de vitesse déterminée $(c_{min})$, et

- calculer les autres coefficients requis p(ω, c, n) par multiplications des coefficients tabulés par $(c/c_{min})^{2n}$, soit

$$p(\omega,c,n) = (c/c_{min})^{2n} p(\omega,c_{min},n).$$

**Patentansprüche**

1. Verfahren zur Extrapolation einer Gruppe von Spuren, die mit Hilfe eines Netzes von Sensoren aufgezeichnet wurden, in einem geophysikalischen Prospektionsprozeß, dadurch gekennzeichnet, daß es die folgenden Schritte enthält:

   i) Approximieren eines Minus-Laplaceoperators $L_0(k_x,k_y) = k_x^2 + k_y^2$ durch die Summe von zwei eindimensionalen Filtern und
   ii) Approximieren eines Extrapolationsoperators $F_0$ durch ein Polynom des Minus-Laplaceoperators $L_0$.

2. Verfahren nach Anspruch 1, dadurch gekennzeichnet, daß der Schritt i) darin besteht, den Minus-Laplaceoperator durch die Summe von zwei eindimensionalen Filtern von der Form

$$L = \sum_{n=0}^{n=N_{Lx}} d_x(n) \cos(nDx\ k_x) + \sum_{n=0}^{n=N_{Ly}} d_y(n) \cos(nDy\ k_y)$$

   zu approximieren.

3. Verfahren nach einem der Ansprüche 1 oder 2, dadurch gekennzeichnet, daß in dem Schritt ii) der Extrapolationsoperator durch ein Polynom des Minus-Laplaceoperators von der Form

$$F(\omega/c,k_x,k_y) = \sum_{n=0}^{n=N} p(\omega/c,n)\ L_0^n$$

   approximiert wird.

4. Verfahren nach einem der Ansprüche 1 oder 3, dadurch gekennzeichnet, daß die Synthese des Minus-Laplaceoperators aus den folgenden Schritten besteht:

   1) Durchführen einer Spektralsynthese des Operators Minus zweite Ableitung nach x, indem ein symmetrischer Filter von der Länge von $2N_{Lx}+1$ für die Schrittweite Dx berechnet wird, dessen Spektrum $D_x(k)$, das durch

$$D_x(k) = \sum_{n=-N_{Lx}}^{n=N_{Lx}} d_x(n)\exp(j\ nDx\ k) \quad \text{mit } d_x(-n) = d_x(n)$$

   definiert ist, das Spektrum von Minus zweite Ableitung $D_0(k) = k^2$ auf $k \in [0,\alpha_x k_{nyqx}]$ mit $0 < \alpha_x < 1$ approximiert,
   2) Durchführen einer Spektralsynthese des Operators Minus zweite Ableitung nach y, indem ein symmetrischer Filter von der Länge $2N_{Ly} + 1$ für die Schrittweite Dy berechnet wird, dessen Spektrum Dy(k), das durch

$$D_y(k) = \sum_{n=-N_{Ly}}^{n=N_{Ly}} d_y(n)\ \exp(j\ nDy\ k) \quad \text{mit } d_y(-n) = d_y(n)$$

   definiert ist, das Spektrum von Minus zweite Ableitung $D_0(k) = k^2$ auf $k \in [0,\alpha_y k_{nyqx}]$ mit $0 < \alpha_y < 1$ approximiert und
   3) Definieren von $L(k_x, k_y) = D_x(k_x) + D_y(k_y)$, welches die Spektralsynthese des Minus-Laplaceoperators $L_0$

$(k_x,k_y) = k_x^2 + k_y^2$ auf dem Rechteck $k_x \in [-\alpha_x k_{nyqx}, \alpha_x k_{nyqx}]$, $k_y \in [-\alpha_y k_{nyqy}, \alpha_y k_{nyqy}]$ ist.

**5.** Verfahren nach einem der Ansprüche 1 bis 4, dadurch gekennzeichnet, daß die Synthese der Koeffizienten $d_x(n)$ und $d_y(n)$ des Minus-Laplaceoperators unter Verwendunq des Remez-Algorithmus mit $S_0(h) = h^2$, $W(h) = 1$ für $h \in [0,\alpha_x\pi]$, $W(h) = \varepsilon$ für $h \in [\alpha_x\pi,\pi]$ durchgeführt wird, wobei $\varepsilon$ eine kleine Zahl von der Größenordnung von 0,05 ist.

**6.** Verfahren nach einem der Ansprüche 1 bis 5, dadurch gekennzeichnet, daß die Polynomialsynthese des Extrapolationsoperators in der Form einer Spektralsynthese durchgeführt wird.

**7.** Verfahren nach einem der Ansprüche 1 bis 6, dadurch gekennzeichnet, daß die Extrapolation in die Tiefe aus den folgenden Schritten besteht:

- Berechnen der Koeffizienten $d_x(n)$, $d_y(n)$ des Minus-Laplaceoperators,
- Bestimmen der Schranken $[L_{min}, L_{max}]$ des Minus-Laplaceoperators,
- Berechnen der Koeffizienten $p(\omega/c,n)$ der Polynomialentwicklung des Extrapolationsoperators $F_0$ $(\omega/c,L)$ für jedes $\omega/c$, das eine Gruppe von Werten aus dem Intervall $[\omega_{min}/c_{max}, \omega_{max}/c_{min}]$ durchläuft.

**8.** Verfahren nach einem der Ansprüche 1 bis 7, dadurch gekennzeichnet, daß die Extrapolation in die Tiefe die folgenden Elemente aufweist:

1) Initialisieren

$$W_{z+dz}(m_x,m_y) = p[\omega/c(m_x,m_y),N]\, W_z(m_x,m_y)$$

2) anschließendes Durchführen von

$$W_{z+dz}(m_x,m_y) = (L^*W_{z+dz})(m_x,m_y) + p[\omega/c(m_x,m_y),n]\, W_z(m_x,m_y)$$

von n = N-1 bis 0, wobei W'= L*W durch

$$W'(n_x,n_y) = \sum_{n=-N_{Lx}}^{n=N_{Lx}} d_x(n)\; W(n_x-n,n_y) \quad + \sum_{n=-N_{Ly}}^{n=N_L} d_y(n)\; W(n_x,n_y-n)$$

definiert ist.

**9.** Verfahren nach einem der Ansprüche 1 bis 8, dadurch gekennzeichnet, daß die Polynomialsynthese des Extrapolationsoperators auf der Grundlage der folgenden Schritte durchgeführt wird:

- Durchführen der Variablensubstitution

$$L=0{,}5\,(L_{min}-L_{max})\cos(h) + 0{,}5\,(L_{min}+L_{max}) = g(h)$$

mit $L \in [L_{min},L_{max}]$, $h \in [0,\pi]$,
wobei $F_0[g(h)] = S_0(h)$ ein bekanntes symmetrisches Spektrum ist,

- Finden der $t(n)$, $n \in [0,N]$ derart, daß

$$S(h) = \sum_{n=0}^{n=N} t(n)\cos(nh)$$

$S_0(h)$ für $h \in [0,h_c]$ approximiert und einen Betrag kleiner als 1 auf $[h_c,\pi]$ mit $h_c = g^{-1}(L_c)$ aufweist,

- anschließendes Definieren $F(L) = S(g^{-1}(L))$.

**10.** Verfahren nach einem der Ansprüche 1 bis 9, dadurch gekennzeichnet, daß es den Schritt des Schreibens des Extrapolationsoperators in der Form

$$F(L) = \sum_{n=0}^{n=N} t(n)\; T_n[(2L-L_{min}-L_{max})/(L_{min}-L_{max})] \qquad (4)$$

umfaßt, wobei $T_n(x)$ das Tschebyscheff-Polynom vom Grad n ist, welches durch $T_n(\cos h) = \cos nh$ definiert ist.

**11.** Verfahren nach einem der Ansprüche 1 bis 10, dadurch gekennzeichnet, daß es den Schritt des Schreibens des Extrapolationsoperators in der Form

$$F(L)= \sum_{n=0}^{n=N} p(n)(AL/L_{max})^n \qquad (5)$$

umfaßt, wobei A ein Skalierungsfaktor ist, der typischerweise den Wert 4 hat.

**12.** Verfahren nach einem der Ansprüche 1 bis 11, dadurch gekennzeichnet, daß die Extrapolation in die Tiefe die folgenden Elemente aufweist:

1) Initialisieren

$$W_{z+dx}\,(m_x,m_y) = p[\omega/c(m_x,m_y),N]\; W_z(m_x,m_y)$$

2) anschließendes Durchführen von

$$W_{z+dz}(m_x,m_y) = (L^*W_{z+dz})(m_x,m_y) + p[\omega/c(m_x,m_y),n]\; W_z(m_x,m_y)$$

für n = N-1 bis 0, wobei W' = L*W durch

$$W'(n_x,n_y) = \sum_{n=-N_{Lx}}^{n=N_{Lx}} [Ad_x(n)/L_{max}]\; W(n_x-n,n_y) + \sum_{n=-N_{Ly}}^{n=N_{Ly}} [Ad_y(n)/L_{max}]\; W(n_x,n_y-n).$$

definiert ist.

**13.** Verfahren nach einem der Ansprüche 1 bis 12, dadurch gekennzeichnet, daß die Extrapolation in die Tiefe die folgenden Elemente aufweist:

1) Initialisieren

$T_0=W_z$

$T_1=L^*W_z$

$$W_{z+dz}(m_x,m_y) = t[\omega/c_{z+dz}(m_x,m_y),0]\; T_0(m_x,m_y) + t[\omega/c_{z+dz}(m_x,m_y),1]\; T_1(m_x,m_y)$$

2) Durchführen der folgenden Schritte von n = 2 bis N:

$T=2^*L^*T_1-T_0$

$$W_{z+dz}[m_x,m_y) = W_{z+dz}(m_x,m_y) + t[\omega/c_{z+dz}(m_x,m_y),n]\; T(m_x,m_y)$$

$T_0=T_1$

$T_1=T$

Ende der Schleife in n,

wobei W'= L*W durch

$$W'(n_x,n_y) = \sum_{n=-N_{Lx}}^{n=N_{Lx}} [2d_x(n)/(L_{min}-L_{max}] \; W(n_x-n,n_y) + \sum_{n=-N_{Ly}}^{n=N_{Ly}} [2d_y(n)/(L_{min}-L_{max}] \; W(n_x,n_y-n) - (L_{min}+L_{max})W(n_x,n_y)/\,(L_{min}-L_{max}).$$

definiert ist.

**14.** Verfahren nach einem der Ansprüche 1 bis 13, dadurch gekennzeichnet, daß es weiterhin eine Phase der dreidimensionalen Extrapolation in der Zeit auf der Grundlage der Extrapolationsfunktion umfaßt, die sich für einen zeitlichen Extrapolationsschritt Dt als

$$G_0(\omega,c,k_x,k_y)=\exp jDt(\omega^2-c^2L_0)^{1/2}$$

mit $L_0(k_x, k_y) = k_x^2 + k_y^2$ schreibt, wobei die Phase der dreidimensionalen Extrapolation in der Zeit die folgenden Elemente aufweist:

- Tabellieren der Koeffizienten $p(\omega,c_{min},n)$ der Polynomialentwicklung für mindestens einen bestimmten Geschwindigkeitswert ($c_{min}$) und
- Berechnen der anderen erforderlichen Koeffizienten $p(\omega, c,n)$ durch Multiplikation der tabellierten Koeffizienten mit $(c/c_{min})^{2n}$, also

$$p(\omega,c,n) = (c/c_{min})^{2n}\; p(\omega,c_{min},n).$$

**15.** Verfahren nach einem der Ansprüche 1 bis 14, dadurch gekennzeichnet, daß es den Schritt des Zerlegens eines Extrapolationsoperators (20) in einen Realteil und einen Imaginärteil und das anschließende Durchführen einer optimalen Synthese im Sinne der $L^\infty$-Norm für jeden der beiden Teile umfaßt.

**16.** Verfahren nach Anspruch 15, dadurch gekennzeichnet, daß die $L^\infty$-optimale Synthese des Realteils und des Imaginärteils des Extrapolationsoperators mit Hilfe des Remez-Algorithmus erzeugt wird.

**17.** Verfahren nach einem der Ansprüche 15 oder 16, dadurch gekennzeichnet, daß die optimale Synthese des Realteils und des Imaginärteils des Extrapolationsoperators darin besteht, die a(n), $n \in [0,N]$ des synthetisierten Spektrums

$$S(h) = \sum_{n=0}^{n=N} a(n) \cdot \cos(nh)$$

derart zu suchen, daß die
$L^\infty$-Norm von $E(h) = \max_{h\in[0,\pi]} |E(h)|$ minimal ist,
wobei $S_0$ für $h \in [0,\pi]$ ein gegebenes reelles symmetrisches Spektrum definiert,
W(h) für $h \in [0,\pi]$ eine gegebene positive reelle Gewichtsfunktion definiert,
N die halbe Länge des gegebenen Filters ist und
$E(h) = W(h)\,[S(h) - S_0(h)]$ die gewichtete Fehlerfunktion des synthetisierten Spektrums bezüglich des gegebenen idealen Spektrums ist.

**18.** Verfahren nach einem der Ansprüche 15 bis 17, dadurch gekennzeichnet, daß der Extrapolationsoperator mit Hilfe der folgenden Schritte synthetisiert wird:

i) Zerlegen des Extrapolationsoperators $F_0(k)\exp(j\Phi_c)$ in den Realteil und den Imaginärteil:

$$F_0(k)\ \exp(j\Phi_c) = R_0(k) + jI_0(k),$$

wobei $\Phi_c$ derart berechnet wird, daß $R_0(k)$ ein Maximum für $k = k_c$ aufweist,

ii) Berechnen von $a_r(n)$, $n \in [0,N]$ derart, daß

$$R(k) = \sum_{n=0}^{n=N} a_r(n) \cos(nDx\ k)$$

dem Minimum von $\max_{k \in [0,kc]} |R(k) - R_0(k)|$ entspricht, wobei man für die Extremwerte von R(k) auf $[k_c,k_{nyq}]$ die Bedingung stellt, daß sie Ordinaten $\pm\alpha$ besitzen, wobei $\alpha$ eine Zahl kleiner als 1 ist,

iii) Berechnen der Gewichtsfunktion W(k) für $k \in [k_c,k_{nyq}]$ :

$$W(k) = [M^2(k) - R^2(k)]^{1/2},$$

wobei M(k) der maximale Betrag in dem Bereich $[k_c, k_{nyq}]$ ist, welcher durch den Benutzer festgelegt wird,

iv) Berechnen von $a_i(n)$, $n \in [0,N]$ derart, daß

$$I(k) = \sum_{n=0}^{n=N} a_i(n) \cos(nDx\ k)$$

dem Minimum von $\max_{k\in[0,kc]} |I_{(k)} - I_0(k)|$ entspricht, wobei man die Bedingung stellt, daß $\max_{k\in[kc,knyq]} W(k) |I(k)|$ gleich 1 ist,

v) Definieren des Extrapolationsoperators durch Summation der in den Schritten ii) und iv) gewonnenen Synthesen, also

$$F(k) = [R(k) + jI(k)]\ \exp(-j\Phi_c),$$

wobei die gesuchten Koeffizienten des Operators sind:

$$a(n) = [a_r(n) + ja_i(n)]\ \exp(-j\Phi_c).$$

**19.** Verfahren nach einem der Ansprüche 15 bis 18, dadurch gekennzeichnet, daß man im Schritt i) die Bedingung

$$R_0(k_c) = 1,\ I_0(k_c) = 0$$

stellt.

**20.** Verfahren nach einem der Ansprüche 15 bis 19, dadurch gekennzeichnet, daß man im Schritt iii) die Bedingung stellt, daß das Minimum von M(k) größer als $\alpha$ und sein Maximum kleiner als 1 ist.

**21.** System für die geophysikalische Prospektion, welches umfaßt:

- eine künstliche Quelle (10) einer Schallwelle,
- ein Netz von Sensoren (20), welche auf der Erdoberfläche angeordnet sind und für Wellen empfindlich sind, die von inneren Erdschichten nach oben reflektiert werden,
- eine Registriervorrichtung (30), welche mit diesen Sensoren verbunden ist, um die von ihnen abgegebenen elektrischen Signale aufzuzeichnen,
- eine Einrichtung (40) zur Verarbeitung der aufgezeichneten Signale und
- eine Einrichtung (50) zum Anzeigen eines verwertbaren Resultats nach einer Verarbeitung dieser Signale,

dadurch gekennzeichnet, daß die Verarbeitungseinrichtung (40) dafür eingerichtet ist, einen Extrapolationsoperator (20) in Realteil und Imaginärteil zu zerlegen und dann eine optimale Synthese im Sinne der $L^\infty$ -Norm für jeden der beiden Teile durchzuführen.

**22.** System nach Anspruch 21, dadurch gekennzeichnet, daß die Verarbeitungseinrichtung (40) die $L^\infty$-optimale Synthese des Realteils und des Imaginärteils des Extrapolationsoperators mit Hilfe des Remez-Algorithmus durchführt.

**23.** System nach einem der Ansprüche 21 oder 22, dadurch gekennzeichnet, daß die Verarbeitungseinrichtung (40) die optimale Synthese des Realteils und des Imaginärteils des Extrapolationsoperators durchführt, indem sie die a (n), n ∈ [0,N] des synthetisierten Spektrums

$$S(h)=\sum_{n=0}^{n=N} a(n)\cos(nh)$$

derart sucht, daß die
$L^\infty$-Norm von $E(h) = \max_{h\in[0,\pi]} |E(h)|$ minimal ist, wobei
$S_0$ eine gegebenes reelles symmetrisches Spektrum für $h \in [0,\pi]$ definiert,
$W(h)$ eine gegebene reelle positive Gewichtsfunktion für $h \in [0,\pi]$ definiert,
N die halbe Länge des gegebenen Filters ist, und
$E(h) = W(h)\,[S(h) - S_0(h)]$ die gewichtete Fehlerfunktion des synthetisierten Spektrums bezüglich des gegebenen idealen Spektrums ist.

**24.** System nach einem der Ansprüche 21 bis 23, dadurch gekennzeichnet, daß die Verarbeitungseinrichtung (40) den Extrapolationsoperator mit Hilfe der folgenden Schritte synthetisiert:

i) Zerlegen des Extrapolationsoperators $F_0(k)\exp(j\Phi_c)$ in Realteil und Imaginärteil

$$F_0(k)\exp(j\Phi_c) = R_0(k) + jI_0(k),$$

wobei $\Phi_c$ derart berechnet wird, daß $R_0(k)$ ein Maximum für $k = k_c$ aufweist

ii) Berechnen von $a_r(n)$, $n \in [0,N]$, derart, daß

$$R(k) = \sum_{n=0}^{n=N} a_r(n)\cos(nDx\ k)$$

dem Minimum von $\max_{h\in[0,kc]} |R(k) - R_0(k)|$ entspricht, wobei man für die Extremwerte von R(k) auf $[k_c,k_{nyq}]$ die Bedingung stellt, daß sie Ordinaten $\pm\alpha$ besitzen, wobei $\alpha$ eine Zahl kleiner als 1 ist,

iii) Berechnen der Gewichtsfunktion W(k) für $k \in [k_c,k_{nyq}]$

$$W(k) = [M^2(k) - R^2(k)]^{-1/2},$$

wobei M(k) der maximale Betrag in dem Bereich $[k_c,k_{nyq}]$ ist, der von dem Benutzer definiert wird,

iv) Berechnen von $a_i(n)$, $n \in [0,N]$ derart, daß

$$I(k) = \sum_{n=0}^{n=N} a_i(n)\cos(nDx\ k)$$

dem Minimum von $\max_{k\in[0,kc]} |I(k) - I_0(k)|$ entspricht, wobei man die Bedingung stellt, daß $\max_{k\in[kc,knyq]} W(k)\,|I(k)|$ gleich 1 ist,

v) Definieren des Extrapolationsoperators durch Summation der in den Schritten ii) und iv) gewonnenen Synthesen, also

$$F(k) = [R(k) + jI(k)]\exp(-j\Phi_c),$$

wobei die gesuchten Koeffizienten des Operators sind:

$$a(n) = [a_r(n) + ja_i(n)]\exp(-j\Phi_c).$$

**25.** System nach einem der Ansprüche 21 bis 24, dadurch gekennzeichnet, daß im Schritt i) die Verarbeitungseinrichtung (40) die Bedingung

$$R_0(k_c) = 1 \text{ und } I_0(k_c) = 0$$

stellt.

**26.** System nach einem der Ansprüche 21 bis 25, dadurch gekennzeichnet, daß in dem Schritt iii) die Verarbeitungseinrichtung (40) die Bedingung stellt, daß das Minimum von M(k) größer als $\alpha$ und sein Maximum kleiner als 1 ist.

**27.** System nach einem der Ansprüche 21 bis 26, dadurch gekennzeichnet, daß die Verarbeitungseinrichtung (40) dafür eingerichtet ist,

i) mindestens einen Minus-Laplaceoperator $L_0(k_x,k_y) = k_x^2 + k_y^2$ durch die Summe von zwei eindimensionalen Filtern zu approximieren und
ii) einen Extrapolationsoperator $F_0$ durch ein Polynom des Minus-Laplaceoperators $L_0$ zu approximieren.

**28.** System nach Anspruch 27, dadurch gekennzeichnet, daß in dem Schritt i) die Verarbeitungseinrichtung (40) den Minus-Laplaceoperator durch die Summe von zwei eindimensionalen Filtern mit der Form

$$L = \sum_{n=0}^{n=N_{Lx}} d_x(n) \cos(nDx\ k_x) + \sum_{n=0}^{n=N_{Ly}} d_y(n) \cos(nDy\ k_y).$$

approximiert.

**29.** System nach einem der Ansprüche 27 oder 28, dadurch gekennzeichnet, daß in dem Schritt ii) die Verarbeitungseinrichtung (40) den Extrapolationsoperator durch ein Polynom des Minus-Laplaceoperators von der Form

$$F(\omega/c, k_x, k_y) = \sum_{n=0}^{n=N} p(\omega/c, n)\ L_0^n.$$

approximiert.

**30.** System nach einem der Ansprüche 21 bis 29, dadurch gekennzeichnet, daß die Verarbeitungseinrichtung zur Synthese des Minus-Laplaceoperators dafür eingerichtet ist,

1) eine Spektralsynthese des Operators Minus zweite Ableitung nach x durchzuführen, indem sie einen symmetrischen Filter mit der Länge $2N_{Lx}+1$ für die Schrittweite $D_x$ berechnet, dessen Spektrum $D_x(k)$, das durch

$$D_x(k) = \sum_{n=-N_{Lx}}^{n=N_{Lx}} d_x(n) \exp(j\ nDx\ k) \qquad \text{mit } d_x(-n) = d_x(n)$$

definiert ist, das Spektrum von Minus zweite Ableitung $D_0(k) = k^2$ auf $k \in [0, \alpha_x k_{nyqx}]$ mit $0 < \alpha_x < 1$ approximiert,
2) eine Spektralsynthese des Operators Minus zweite Ableitung nach y durchzuführen, indem ein symmetrischer Filter von der Länge $2N_{Ly}+1$ für die Schrittweite $D_y$ berechnet wird, dessen Spektrum $D_y(k)$, das durch

$$D_y(k) = \sum_{n=-N_{Ly}}^{n=N_{Ly}} d_y(n)\ \exp(j\ nDy\ k) \qquad \text{mit } d_y(-n) = d_y(n)$$

definiert ist, das Spektrum von Minus zweite Ableitung $D_0(k) = k^2$ für $k \in [0, \alpha_y k_{nyqx}]$ mit $0 < \alpha_y < 1$ approximiert, und

3) $L(k_x,k_y) = D_x(k_x) + D_y(k_y)$ zu definieren, welches die Spektralsynthese des Minus-Laplaceoperators $L_0(k_x,k_y) = k_x^2 + k_y^2$ auf dem Rechteck $k_x \in [-\alpha_x k_{nyqx}, \alpha_x k_{nyqx}]$, $k_y \in [-\alpha_y k_{nyqy}, \alpha_y k_{nyqy}]$ ist.

**31.** System nach einem der Ansprüche 21 bis 30, dadurch gekennzeichnet, daß die Synthese der Koeffizienten $d_x(n)$ und $d_y(n)$ des Minus-Laplaceoperators von der Verarbeitungseinrichtung (40) unter Verwendung des Remez-Algorithmus mit $S_0(h) = h^2$, $W(h) = 1$ für $h \in [0,\alpha_x\pi]$, $W(h) = \varepsilon$ für $h \in [\alpha_x\pi,\pi]$ durchgeführt wird, wobei $\varepsilon$ eine kleine Zahl von der Größenordnung von 0,05 ist.

**32.** System nach einem der Ansprüche 21 bis 31, dadurch gekennzeichnet, daß die Polynomialsynthese des Extrapolationsoperators durch die Verarbeitungseinrichtung (40) in der Form einer Spektralsynthese bewirkt wird.

**33.** System nach einem der Ansprüche 21 bis 32, dadurch gekennzeichnet, daß die Verarbeitungseinrichtung (40) die Extrapolation in die Tiefe mit Hilfe der folgenden Schritte durchführt:

- Berechnen der Koeffizienten $d_x(n)$, $d_y(n)$ des Minus-Laplaceoperators,
- Bestimmen der Schranken $[L_{min}, L_{max}]$ des Minus-Laplaceoperators,
- Berechnen der Koeffizienten $p(\omega/c,n)$ der Polynomialentwicklung des Extrapolationsoperators $F_0(\omega/c,L)$ für jedes $\omega/c$, das eine Gruppe von Werten aus dem Intervall $[\omega_{min}/c_{max}, \omega_{max}/c_{min}]$ durchläuft.

**34.** System nach einem der Ansprüche 21 bis 33, dadurch gekennzeichnet, daß die Verarbeitungseinrichtung (40) zur Extrapolation in die Tiefe dafür eingerichtet ist,

1) wie folgt zu initialisieren

$$W_{z+dz}[m_x,m_y) = p[\omega/c(m_x,m_y),N]\, W_z(m_x,m_y), \text{ sodann}$$

2) von n = N-1 bis 0 zu berechnen

$$W_{z+dz}(m_x,m_y) = (L^*W_{z+dz})(m_x,m_y) + p[\omega/c(m_x,m_y),n]\, W_z(m_x,m_y)$$

wobei W'= L*W durch

$$W'(n_x,n_y) = \sum_{n=-N_{Lx}}^{n=N_{Lx}} d_x(n)\, W(n_x-n,n_y) + \sum_{n=-N_{Ly}}^{n=N_L} d_y(n)\, W(n_x,n_y-n)$$

definiert ist.

**35.** System nach einem der Ansprüche 21 bis 34, dadurch gekennzeichnet, daß die Polynomialsynthese des Extrapolationsoperators durch die Verarbeitungseinrichtung (40) auf der Grundlage der folgenden Schritte durchgeführt wird:

- Durchführen der Variablensubstitution

$$L=0{,}5(L_{min}-L_{max})\cos(h) + 0{,}5(L_{min}+L_{max})=g(h) \text{ mit } L \in [L_{min},L_{max}],\ h \in [0,\pi],$$

wobei $F_0[g(h)] = S_0(h)$ ein bekanntes symmetrisches Spektrum ist,

- Finden der t(n), $n \in [0,N]$ derart, daß

$$S(h) = \sum_{n=0}^{n=N} t(n) \cos(nh)$$

$S_0(h)$ für $h \in [0,h_c]$ approximiert und einen Betrag kleiner 1 auf $[h_c,\pi]$ besitzt, wobei $h_c = g^{-1}(L_c)$,

- anschließendes Definieren $F(L) = S(g^{-1}(L))$.

**36.** System nach einem der Ansprüche 21 bis 35, dadurch gekennzeichnet, daß die Verarbeitungseinrichtung (40) den Extrapolationsoperator in der Form

$$F(L) = \sum_{n=0}^{n=N} t(n)\ T_n[\{2L-L_{min}-L_{max}\}/\{L_{min}-L_{max}\}]$$

schreibt, wobei $T_n(x)$ das Tschebyscheff-Polynom vom Grad n ist das durch $T_n(\cos h) = \cos nh$ definiert ist.

**37.** System nach einem der Ansprüche 21 bis 36, dadurch gekennzeichnet, daß die Verarbeitungseinrichtung (40) den Extrapolationsoperator in der Form

$$F(L) = \sum_{n=0}^{n=N} p(n)(AL/L_{max})^n$$

schreibt, wobei A ein Skalierungsfaktor ist, der typischerweise den Wert 4 hat.

**38.** System nach einem der Ansprüche 21 bis 37, dadurch gekennzeichnet, daß die Verarbeitungseinrichtung (40) für die Extrapolation in die Tiefe dafür eingerichtet ist,

1) wie folgt zu initialisieren

$$W_{z+dz}(m_x,m_y) = p[\omega/c(m_x,m_y),N]\ W_z(m_x,m_y),$$ und dann

2) von n = N-1 bis 0 zu berechnen:

$$W_{z+dz}(m_x,m_y) = (L^*W_{z+dz})(m_x,m_y) + p[\omega/c(m_x,m_y),n]\ W_z(m_x,m_y)$$

wobei W'= L*W durch

$$W'(n_x,n_y) = \sum_{n=-N_{Lx}}^{n=N_{Lx}} [Ad_x(n)/L_{max}]\ W(n_x-n,n_y) + \sum_{n=-N_{Ly}}^{n=N_{Ly}} [Ad_y(n)/L_{max}]\ W(n_x,n_y-n).$$

definiert ist.

**39.** System nach einem der Ansprüche 21 bis 38, dadurch gekennzeichnet, daß für die Extrapolation in die Tiefe die Verarbeitungseinrichtung (40) dafür eingerichtet ist,

1) wie folgt zu initialisieren:

$T_0=W_z$
$T_1=L^*W_z$

$$W_{z+dz}(m_x,m_y) = t[\omega/c_{z+dz}(m_x,m_y),0]\ T_0(m_x,m_y) + t[\omega/c_{z+dz}(m_x,m_y),1]\ T_1(m_x,m_y)$$

2) von n = 2 bis N zu berechnen:

$T=2^*L^*T_1-T_0$

$$W_{z+dz}(m_x,m_y) = W_{z+dz}(m_x,m_y) + t[\omega/c_{z+dz}(m_x,m_y),n]\ T(m_x,m_y)$$

$T_0=T_1$
$T_1=T$
Ende der Schleife in n,

wobei W'= L*W durch

$$W'(n_x,n_y) = \sum_{n=-N_{Lx}}^{n=N_{Lx}} [2d_x(n)/(L_{min}-L_{max}]\ W(n_x-n,n_y) + \sum_{n=-N_{Ly}}^{n=N_{Ly}} [2d_y(n)/(L_{min}-L_{max}]\ W(n_x,n_y-n)$$

definiert ist.

**40.** System nach einem der Ansprüche 21 bis 39, dadurch gekennzeichnet, daß die Verarbeitungseinrichtung (40) dafür eingerichtet ist, eine Phase einer dreidimensionalen Extrapolation in der Zeit auf der Grundlage der Extrapolationsfunktion, die sich für einen zeitlichen Extrapolationsschritt Dt wie folgt schreibt:

$$G_0(\omega,c,k_x,k_y) = \exp jDt(\omega^2-c^2L_0)^{1/2}$$

mit $L_0(k_x,k_y)=k_x{}^2+k_y{}^2$
aufgrund der folgenden Schritte durchzuführen:

- Tabellieren der Koeffizienten $p(\omega,c_{min},n)$ der Polynomialentwicklung für mindestens einen festgelegten Geschwindigkeitswert ($c_{min}$) und
- Berechnen der anderen erforderlichen Koeffizienten $p(\omega, c,n)$ durch Muliplikation der tabellierten Koeffizienten mit $(c/c_{min})^{2n}$, also

$$p(\omega,c,n) = (c/c_{min})^{2n}\ p(\omega,c_{min},n).$$

**Claims**

**1.** A method of extrapolating a set of traces recorded by means of an array of sensors in a geophysical prospecting process,
the method being characterized by the fact that it comprises the steps consisting in:

i) approximating a minus Laplacian $L_0(k_x,k_y) = k_x{}^2+k_y{}^2$ by the sum of two one-dimensional filters; and
ii) approximating an extrapolation operator $F_0$ by a polynomial of the minus Laplacian $L_0$.

**2.** A method according to claim 1, characterized by the fact that step i) consists in approximating the minus Laplacian by the sum of two one-dimensional filters of the form:

$$L = \sum_{n=0}^{n=N_{Lx}} d_x(n)\ \cos(nDx\ k_x) + \sum_{n=0}^{n=N_{Ly}} d_y(n)\ \cos(nDy\ k_y)$$

**3.** A method according to claim 1 or 2, characterized by the fact that step ii) of the extrapolation operator is approximated by a polynomial of the minus Laplacian of the form:

$$F_0(\omega/c,k_x,k_y) = \sum_{n=0}^{n=N} p(\omega/c,n)\ L_0{}^n$$

**4.** A method according to claim 1 or 3, characterized by the fact that synthesis of the minus Laplacian consists in:

1) performing spectrum synthesis of the minus second derivative operator in x, by calculating a symmetrical filter of length $2N_{Lx}+1$ with a sampling interval Dx, where the spectrum $D_x(k)$ defined by:

$$D_x(k) = \sum_{n=-N_{Lx}}^{n=N_{Lx}} d_x(n)\exp(j\ nDx\ k) \quad \text{with} \quad d_x(-n)=d_x(n)$$

approximates the spectrum of the minus second derivative $D_0(k)=k^2$ over $k\in[0,\alpha_x\ k_{nyqx}]$ with $0 < \alpha_x < 1$
2) performing spectrum synthesis of the minus second derivative operator in y by calculating a symmetrical filter of length $2N_{Ly}+1$ for a sampling step size Dy, whose spectrum Dy(k) defined by:

$$D_y(k) = \sum_{n=-N_{Ly}}^{n=N_{Ly}} d_y(n)\ \exp(j\ nDy\ k) \quad \text{with} \quad d_y(-n)=d_y(n)$$

approximates the spectrum of the minus second derivative $D_0(k) = k^2$ over $k\in[0,\alpha_y k_{nyqx}]$ with $0 < \alpha_y < 1$; and
3) defining $L(k_x,k_y) = D_x(k_x) + D_y(k_y)$ which is the spectrum synthesis of the minus Laplacian $L_0(k_x,k_y)=k_x{}^2+k_y{}^2$ over the rectangle $k_x\in[-\alpha_x k_{nyqx},\alpha_x k_{nyqx}]$, $k_y\in[-\alpha_y k_{nyqy},\alpha_y k_{nyqy}]$.

**5.** A method according to any one of claims 1 to 4, characterized by the fact that the coefficients $d_x(n)$ and $d_y(n)$ of the minus Laplacian are synthesized by using the Remez algorithm, with $S_0(h)=h^2$, $W(h)=1$ for $h\in[0,\alpha_x,\pi]$, $W(h)=\varepsilon$ for $h\in[\alpha_x,\pi,\pi]$ where $\varepsilon$ is a small number equal to about 0.05.

**6.** A method according to any one of claims 1 to 5, characterized by the fact that the polynomial synthesis of the extrapolation operator is performed in the form of a spectrum synthesis.

**7.** A method according to any one of claims 1 to 6, characterized by the fact that the depth extrapolation consists in:

computing the coefficients $d_x(n)$ and $d_y(n)$ of the minus Laplacian;
computing the limits $[L_{min},L_{max}]$ of the minus Laplacian; and
for each $\omega/c$ running over sampling in the range $[\omega_{min}/c_{max},\omega_{max}/c_{min}]$ calculating the coefficients $p(\omega/c,n)$ of the polynomial development of the extrapolation operator $F_0(\omega/c,L)$.

**8.** A method according to any one of claims 1 to 7, characterized by the fact that the depth extrapolation consists in:

1) initializing

$$W_{z+dz}(m_x,m_y) = p[\omega/c(m_x,m_y),N]\ W_z(m_x,m_y)$$

then
2) for n=N-1 to 0 doing:

$$W_{z+dz}(m_x,m_y) = (L^*W_{z+dz})(m_x,m_y) + p[\omega/c(m_x,m_y),n]\ W_z(m_x,m_y)$$

with W'=L*W defined by

$$W'(n_x,n_y) = \sum_{n=-N_{Lx}}^{n=N_{Lx}} d_x(n)\ W(n_x-n,n_y) + \sum_{n=-N_{Ly}}^{n=N_{Ly}} d_y(n)\ W(n_x,n_y-n)$$

**9.** A method according to any one of claims 1 to 8, characterized by the fact that the polynomial synthesis of the extrapolation operator is performed on the basis of steps consisting in:
changing variable:

$$L = \tfrac{1}{2}(L_{min}-L_{max})\cos(h) + \tfrac{1}{2}(L_{min}+L_{max}) = g(h)$$

with $L\in[L_{min},L_{max}]$, $h\in[0,\pi]$, and $F_o[g(h)] = S_0(h)$ being a known symmetrical spectrum

finding t(n), n∈[0,N] such that

$$S(h) = \sum_{n=0}^{n=N} t(n)\cos(nh)$$

approximates to $S_0(h)$ for h∈[0,$h_c$] and has a modulus of less than one over [$h_c$,π] with $h_c = g^{-1}(L_c)$; and then defining $F(L) = S(g^{-1}(L))$.

**10.** A method according to any one of claims 1 to 9, characterized by the fact that it includes the step consisting in writing the extrapolation operation in the form:

$$(4)\quad F(L) = \sum_{n=0}^{n=N} t(n)\, T_n[(2L-L_{min}-L_{max})/(L_{min}-L_{max})]$$

where $T_n(x)$ is the Chebychev polynomial of degree n defined by $T_n(\cos h) = \cos nh$.

**11.** A method according to any one of claims 1 to 10, characterized by the fact that it includes the step consisting in writing the extrapolation operator in the form:

$$(5)\quad F(L) = \sum_{n=0}^{n=N} p(n)(AL/L_{max})^n$$

where A is a scale factor typically equal to 4.

**12.** A method according to any one of claims 1 to 11, characterized by the fact that depth extrapolation consists in:

1) initializing

$$W_{z+dz}(m_x,m_y) = p[\omega/c(m_x,m_y),N]\, W_z(m_x,m_y) \text{ then}$$

2) for n=N-1 to 0 doing:

$$W_{z+dz}(m_x,m_y) = (L^*W_{z+dz})(m_x,m_y) + p[\omega/c(m_x,m_y),n]\, W_z(m_x,m_y)$$

with W'=L*W defined by

$$W'(n_x,n_y) = \sum_{n=-N_{Lx}}^{n=N_{Lx}} [Ad_x(n)/L_{max}]\, W(n_x-n,n_y) + \sum_{n=-N_{Ly}}^{n=N_{Ly}} [Ad_y(n)/L_{max}]\, W(n_x,n_y-n)$$

**13.** A method according to any one of claims 1 to 12, characterized by the fact that depth extrapolation consists in:

1) initializing:
$T_0 = W_z$
$T_1 = L^*W_z$

$$W_{z+dz}(m_x,m_y) = t[\omega/c_{z+dz}(m_x,m_y),0]T_0(m_x,m_y) + t[\omega/c_{z+dz}(m_x,m_y),1]T_1(m_x,m_y)$$

2) for n = 2 to N doing:
$T = 2 * L * T_1 - T_0$

$$W_{z+dz}(m_x,m_y) = W_{z+dz}(m_x,m_y) + t[\omega/c_{z+dz}(m_x,m_y),n]\, T(m_x,m_y)$$

$T_0 = T_1$

$T_1 = T$

end n loop

with W'=L*W defined by

$$W'(n_x,n_y) = \sum_{n=-N_{Lx}}^{n=N_{Lx}} [2d_x(n)/(L_{min}-L_{max}]\ W(n_x-n,n_y)$$
$$+ \sum_{n=-N_{Ly}}^{n=N_{Ly}} [2d_y(n)/(L_{min}-L_{max}]\ W(n_x,n_y-n)$$
$$- (L_{min}+L_{max})W(n_x,n_y)/(L_{min}-L_{max}).$$

**14.** A method according to any one of claims 1 to 13, characterized by the fact that it further includes a time 3D extrapolation stage on the basis of the extrapolation function which is written for one time extrapolation step Dt:

$$G_0(\omega,c,k_x,k_y) = \exp jDt(\omega^2-c^2L_0)^{½} \text{ with } L_0(k_x,k_y)=k_x^2+k_y^2$$

which time 3D extrapolation stage consists in:

tabulating the coefficients $p(\omega,c_{min},n)$ of the polynomial development for at least one determined velocity value ($c_{min}$); and

calculating the other required coefficients $p(\omega,c,n)$ by multiplying the tabulated coefficients by $(c/c_{min})^{2n}$, i.e.

$$p(\omega,c,n) = (c/c_{min})^{2n}p(\omega,c_{min},n).$$

**15.** A method according to any one of claims 1 to 14, characterized by the fact that it includes the step consisting in splitting an extrapolation operator (20) into a real part and an imaginary part, and then in performing synthesis that is optimum in the L-∞ sense on each of the two parts.

**16.** A method according to claim 15, characterized by the fact that the L-∞ optimum synthesis on the real part and on the imaginary part of the extrapolation operator is performed by using the Remez algorithm.

**17.** A method according to claim 15 or 16, characterized by the fact that the optimum synthesis of the real part and of the imaginary part of the extrapolation operator consists in looking for a(n), $n\in[0,N]$ of the synthesized spectrum:

$$S(h) = \sum_{n=0}^{n=N} a(n)\cos(nh)$$

such that the

L-∞ norm of $E(h) = \max_{h\in[0,\pi]} |E(h)|$ is a minimum with:

$S_0$ defining for $h\in[0,\pi]$ a given symmetrical real spectrum;

W(h) defining for $h\in[0,\pi]$ a given positive real weighting function;

N being the half-length of the given filter; and

$E(h)=W(h)[S(h)-S_0(h)]$ being the weighted error function between the synthesized spectrum and the given ideal spectrum.

**18.** A method according to any one of claims 15 to 17, characterized by the fact that the extrapolation operator is synthesized by means of the steps consisting in:

i) splitting the extrapolation operator $F_0(k)\exp(j\phi_c)$ into real and imaginary parts;

$$F_0(k)\exp(j\phi_c) = R_0(k) + jI_0(k)$$

$\phi_c$ being calculated in such a manner that $R_0(k)$ has a maximum for $k=k_c$;

ii) calculating $a_r(n)$, $n\in[0,N]$, such that

$$R(k) = \sum_{n=0}^{n=N} a_r(n)\cos(nDx\ k)$$

corresponds to the minimum of $\max_{k\in[0,kc]} |R(k)-R_0(k)|$, while constraining the extreme values of R(k) over $[k_c,k_{nyq}]$ to have ordinates $\pm\alpha$ where $\alpha$ is a number smaller than one;

iii) calculating the weighting function W(k) for $k\in[k_c,k_{nyq}]$:

$$W(k) = [M^2(k) - R^2(k)]^{-1/2}$$

where M(k) is the maximum modulus in the band $[k_c,k_{nyq}]$ defined by the user;

iv) calculating $a_i(n)$, $n\in[0,N]$ such that:

$$I(k) = \sum_{n=0}^{n=N} a_i(n)\cos(nDx\ k)$$

corresponds to the minimum of $\max_{k\in[0,kc]} |I(k)-I_0(k)|$ while constraining $\max_{k\in[kc,knyq]} W(k)|I(k)|$ to be equal to one; and

v) defining the extrapolation operator by summing the syntheses obtained in steps ii) and iv), i.e.:

$$F(k)=[R(k)+jI(k)]\exp(-j\phi_c)$$

the looked-for coefficients of the operator being:

$$a(n) = [a_r(n)+ja_i(n)]\exp(-j\phi_c).$$

**19.** A method according to any one of claims 15 to 18, characterized by the fact that in step i), the following is set:

$$R_0(k_c)=1 \text{ and } I_0(k_c)=0.$$

**20.** A method according to any one of claims 15 to 19, characterized by the fact that in step iii) the minimum of M(k) is constrained to be greater than $\alpha$ and its maximum is constrained to be less than one.

**21.** A geophysical prospecting system of the type comprising:

an artificial soundwave source (10);
an array of sensors (20) disposed on the surface of the ground and sensitive to waves reflected upwards by the internal strata of the ground;
a recorder (30) connected to said sensors for recording the electrical signals from them;
processor means (40) for processing the recorded signals; and
display means (50) for displaying a usable result after processing the signals;
the system being characterized by the fact that the processor means (40) are adapted to split an extrapolation operator (20) into a real part and an imaginary part, and then to perform synthesis that is optimum in the L-∞ norm sense on each of the two parts.

**22.** A system according to claim 21, characterized by the fact that the processor means (40) perform L-∞ optimum synthesis on the real part and on the imaginary part of the extrapolation operator with the help of the Remez algorithm.

**23.** A system according to any one of claims 21 to 22, characterized by the fact that the processor means (40) perform optimum synthesis of the real part and of the imaginary part of the extrapolation operator by searching for a(n), $n\in[0,N]$ of the synthesized spectrum:

$$S(h) = \sum_{n=0}^{n=N} a(n)\cos(nh)$$

such that the L-∞ norm of $E(h) = \max_{h\in[0,\pi]} |E(h)|$ is a minimum
with:

$S_0$ defining a given symmetrical real spectrum for $h \in [0,\pi]$;
W(h) defining a given positive real weighting function for $h \in [0,\pi]$;
N being the given filter half-length; and
$E(h)=W(h)[S(h)-S_0(h)]$ being the weighted error function between the synthesized spectrum and the given ideal spectrum.

**24.** A system according to any one of claims 21 to 23, characterized by the fact that the processor means (40) synthesize the extrapolation operator with the help of steps consisting in:

i) splitting the extrapolation operator $F_0(k)\exp(j\phi_c)$ into real and imaginary parts;

$$F_0(k)\exp(j\phi_c) = R_0(k) + jI_0(k)$$

$\phi_c$ being calculated in such a manner that $R_0(k)$ has a maximum for $k=k_c$;
ii) calculating $a_r(n)$, $n \in [0,N]$, such that

$$R(k) = \sum_{n=0}^{n=N} a_r(n)\cos(nDx\,k)$$

corresponds to the minimum of $\max_{k\in[0-kc]} |R(k)-R_0(k)|$, while constraining the extreme values of R(k) over $[k_c,k_{nyq}]$ to have ordinates $\pm\alpha$ where $\alpha$ is a number smaller than one;
iii) calculating the weighting function W(k) for $k \in [k_c,k_{nyq}]$:

$$W(k) = [M^2(k) - R^2(k)]^{-1/2}$$

where M(k) is the maximum modulus in the band $[k_c,k_{nyq}]$ defined by the user;
iv) calculating $a_i(n)$, $n \in [0,N]$ such that:

$$I(k) = \sum_{n=0}^{n=N} a_i(n)\cos(nDx\,k)$$

corresponds to the minimum of $\max_{k\in[0,kc]} |I(k)-I_0(k)|$ while constraining $\max_{k\in[kc,knyq]} W(k)|I(k)|$ to be equal to one; and
v) defining the extrapolation operator by summing the syntheses obtained in steps ii) and iv), i.e.:

$$F(k)=[R(k)+jI(k)]\exp(-j\phi c)$$

the looked-for coefficients of the operator being:

$$a(n) = [a_r(n)+ja_i(n)]\exp(-j\phi_c).$$

**25.** A system according to any one of claims 21 to 24, characterized by the fact that at step i) the processor means (40) set:

$$R_0(k_c)=1 \text{ and } I_0(k_c)=0.$$

**26.** A system according to any one of claims 21 to 25, characterized by the fact that at step iii) the processor means (40) constrain the minimum of M(k) to be greater than $\alpha$ and its maximum to be less than one.

**27.** A system according to any one of claims 21 to 26, characterized by the fact that the processor means are adapted to:

i) approximate a minus Laplacian $L_0(k_x,k_y) = k_x^2+k_y^2$ by the sum of two one-dimensional filters; and
ii) approximate an extrapolation operator $F_0$ by a polynomial of the minus Laplacian $L_0$.

**28.** A system according to claim 27, characterized by the fact that at step i) the processor means (40) approximate the minus Laplacian by the sum of two one-dimensional filters of the form:

$$L = \sum_{n=0}^{n=N_{Lx}} d_x(n)\cos(nDx\,k_x) + \sum_{n=0}^{n=N_{Ly}} d_y(n)\cos(nDy\,k_y)$$

**29.** A system according to any one of claims 27 to 28, characterized by the fact that at step ii) the processor means (40) approximate the extrapolation operator by a polynomial of the minus Laplacian of the form:

$$F_0(\omega/c,k_x,k_y) = \sum_{n=0}^{n=N} p(\omega/c,n)\ L_0^n$$

**30.** A system according to any one of claims 21 to 29, characterized by the fact that to synthesize the minus Laplacian, the processor means are adapted to:

1) perform spectrum synthesis of the minus second derivative operator in x, by calculating a symmetrical filter of length $2N_{Lx}+1$ with a sampling interval Dx, where the spectrum $D_x(k)$ defined by:

$$D_x(k) = \sum_{n=-N_{Lx}}^{n=N_{Lx}} d_x(n)\exp(j\ nDx\ k) \quad \text{with} \quad d_x(-n)=d_x(n)$$

approximates the spectrum of the minus second derivative $D_0(k)=k^2$ over $k\in[0,\alpha_x\ k_{nyqx}]$ with $0 < \alpha_x < 1$
2) performing spectrum synthesis of the minus second derivative operator in y by calculating a symmetrical filter of length $2N_{Ly}+1$ with a sampling interval Dy, whose spectrum $D_y(k)$ defined by:

$$D_y(k) = \sum_{n=-N_{Ly}}^{n=N_{Ly}} d_y(n)\ \exp(j\ nDy\ k) \quad \text{with} \quad d_y(-n)=d_y(n)$$

approximates the spectrum of the minus second derivative $D_0(k) = k^2$ over $k\in[0,\alpha_y k_{nyqx}]$ with $0 < \alpha_y < 1$; and
3) defining $L(k_x,k_y) = D_x(k_x) + D_y(k_y)$ which is the spectrum synthesis of the minus Laplacian $L_0(k_x,k_y)=k_x{}^2+k_y{}^2$ over the rectangle $k_x\in[-\alpha_x k_{nyqx},\alpha_x k_{nyqx}]$, $k_y\in[-\alpha_y k_{nyqy}, \alpha_y k_{nyqy}]$.

**31.** A system according to any one of claims 21 to 30, characterized by the fact that the coefficients $d_x(n)$ and $d_y(n)$ of the minus Laplacian are synthesized by the processor means (40) by using the Remez algorithm, with $S_0(h)=h^2$, $W(h)=1$ for $h\in[0,\alpha_x,\pi]$, $W(h)=\varepsilon$ for $h\in[\alpha_x,\pi,\pi]$ where $\varepsilon$ is a small number equal to about 0.05.

**32.** A system according to any one of claims 21 to 31, characterized by the fact that the polynomial of the extrapolation operator is synthesized by the processor means (40) in the form of a spectrum synthesis.

**33.** A system according to any one of claims 21 to 32, characterized by the fact that the processor means (40) form depth extrapolation with the help of steps that consist in:

calculating the coefficients $d_x(n)$ and $d_y(n)$ of the minus Laplacian;
defining the limits $[L_{min},L_{max}]$ of the minus Laplacian; and
for each $\omega$/c running over sampling in the range $[\omega_{min}/c_{max},\omega_{max}/c_{min}]$ calculating the coefficients $p(\omega/c,n)$ of the polynomial development of the extrapolation operator $F_0(\omega/c,L)$.

**34.** A system according to any one of claims 21 to 33, characterized by the fact that for depth extrapolation, the processor means (40) are adapted to:

1) initializing

$$W_{z+dz}(m_x,m_y) = p[\omega/c(m_x,m_y),N]\ W_z(m_x,m_y) \text{ then}$$

2) for n=N-1 to 0 doing:

$$W_{z+dz}[m_x,m_y) = (L^*W_{z+dz})(m_x,m_y) + p[\omega/c(m_x,m_y),n]\ W_z(m_x,m_y)$$

with W'=L*W defined by

$$W'(n_x,n_y) = \sum_{n=-N_{Lx}}^{n=N_{Lx}} d_x(n)\ W(n_x-n,n_y) + \sum_{n=-N_{Ly}}^{n=N_{Ly}} d_y(n)\ W(n_x,n_y-n)$$

**35.** A system according to any one of claims 21 to 34, characterized by the fact that the polynomial of the extrapolation operator is synthesized by the processor means (40) on the basis of steps consisting in:

changing variable:

$L = ½(L_{min}-L_{max}) \cos(h) + ½(L_{min}+L_{max}) = g(h)$ with $L \in [L_{min}, L_{max}]$, $h \in [0,\pi]$, and

$F_0[g(h)] = S_0(h)$ being a known symmetrical spectrum finding t(n), $n \in [0,N]$ such that

$$S(h) = \sum_{n=0}^{n=N} t(n) \cos(nh)$$

approximates to $S_0(h)$ for $h \in [0,h_c]$ and has a modulus of less than one over $[h_c,\pi]$ with $h_c = g^{-1}(L_c)$; and then defining $F(L) = S(g^{-1}(L))$.

**36.** A system according to any one of claims 21 to 35, characterized by the fact that the processor means (40) write the extrapolation operator in the form:

$$(4) \quad F(L) = \sum_{n=0}^{n=N} t(n)\ T_n[(2L-L_{min}-L_{max})/(L_{min}-L_{max})]$$

where $T_n(x)$ is the Chebychev polynomial of degree n defined by $T_n(\cos h) = \cos nh$.

**37.** A system according to any one of claims 21 to 36, characterized by the fact that the processor means (40) write the extrapolation operator in the form:

$$(5) \quad F(L) = \sum_{n=0}^{n=N} p(n)(AL/L_{max})^n$$

where A is a scale factor typically equal to 4.

**38.** A system according to any one of claims 21 to 37, characterized by the fact that for depth extrapolation the processor means (40) are adapted to:

1) initializing

$$W_{z+dz}(m_x,m_y) = p[\omega/c(m_x,m_y),N]\ W_z(m_x,m_y) \text{ then}$$

2) for n=N-1 to 0 doing:

$$W_{z+dz}(m_x,m_y) = (L{*}W_{z+dz})(m_x,m_y) + p[\omega/c(m_x,m_y),n]\ W_z(m_x,m_y)$$

with W'=L*W defined by

$$W'(n_x,n_y) = \sum_{n=-N_{Lx}}^{n=N_{Lx}} [Ad_x(n)/L_{max}]\ W(n_x-n,n_y) + \sum_{n=-N_{Ly}}^{n=N_{Ly}} [Ad_y(n)/L_{max}]\ W(n_x,n_y-n)$$

**39.** A system according to any one of claims 21 to 38, characterized by the fact that for depth extrapolation, the processor means (40) are adapted to:

1) initializing:

$T_0 = W_z$

$T_1 = L{*}W_z$

$$W_{z+dz}(m_x,m_y) = t[\omega/c_{z+dz}(m_x,m_y),0]T_0(m_x,m_y) +$$

$$t[\omega/c_{z+dz}(m_x,m_y),1]T_1(m_x,m_y)$$

2) for n = 2 to N doing:
$T = 2 * L * T_1 - T_0$

$$W_{z+dz}(m_x,m_y) = W_{z+dz}(m_x,m_y) + t[\omega/c_{z+dz}(m_x,m_y),n]T(m_x,m_y)$$

$T_0 = T_1$
$T_1 = T$
end n loop
with W'=L*W defined by

$$W'(n_x,n_y) = \sum_{n=-N_{Lx}}^{n=N_{Lx}} [2d_x(n)/(L_{min}-L_{max}]\ W(n_x-n,n_y) + \sum_{n=-N_{Ly}}^{n=N_{Ly}} [2d_y(n)/(L_{min}-L_{max}]\ W(n_x,n_y-n) - (L_{min}+L_{max})W(n_x,n_y)/(L_{min}-L_{max}).$$

**40.** A system according to any one of claims 21 to 39, characterized by the fact that the processor means (40) are adapted to operate a time 3D extrapolation stage on the basis of the extrapolation function which is written as follows for one time extrapolation step Dt:

$$G_0(\omega,c,k_x,k_y) = \exp jDt(\omega^2-c^2L_0)^{½} \text{ with } L_0(k_x,k_y)=k_x^2+k_y^2$$

which time 3D extrapolation stage consists in:

tabulating the coefficients $p(\omega,c_{min},n)$ of the polynomial development for at least one determined velocity value $(c_{min})$; and

calculating the other required coefficients $p(\omega,c,n)$ by multiplying the tabulated coefficients by $(c/c_{min})^{2n}$, i.e.

$$p(\omega,c,n) = (c/c_{min})^{2n}p(\omega,c_{min},n).$$

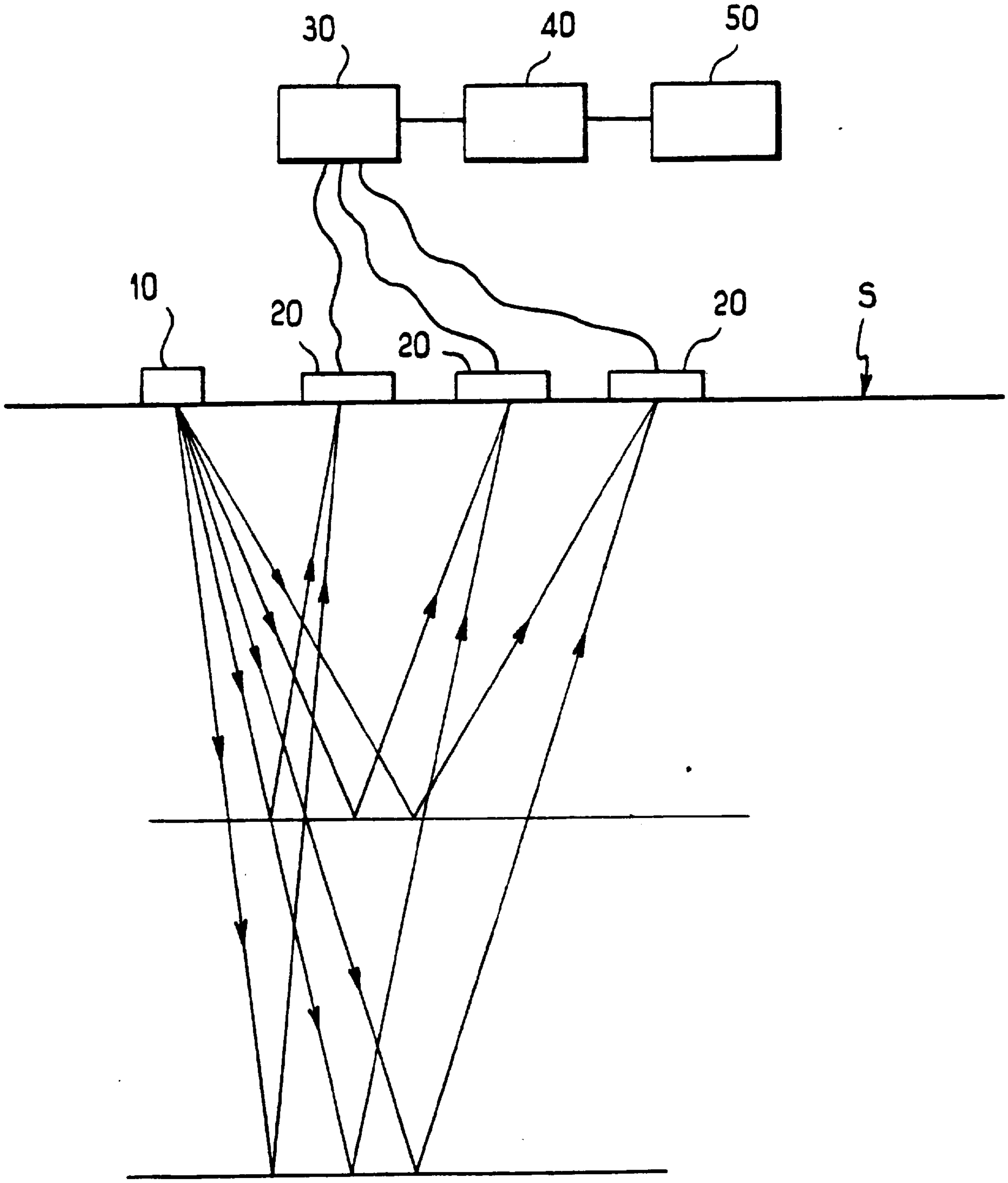


FIG_1

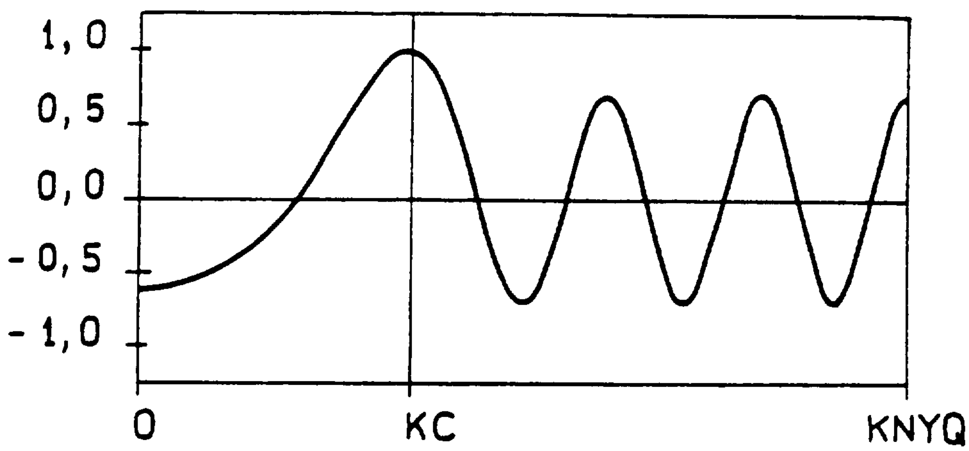


PARTIE REELLE DU FILTRE D'EXTRAPOLATION

FIG.2a

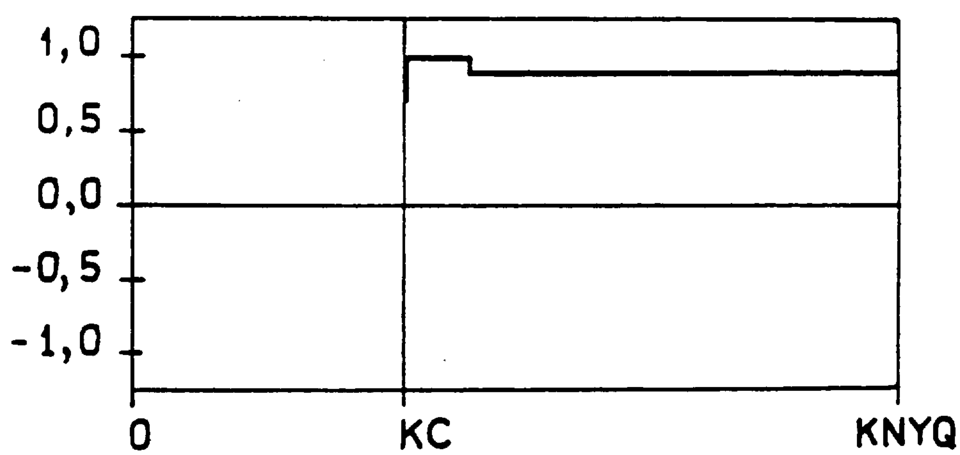


MODULE MAXIMAL

FIG.2b

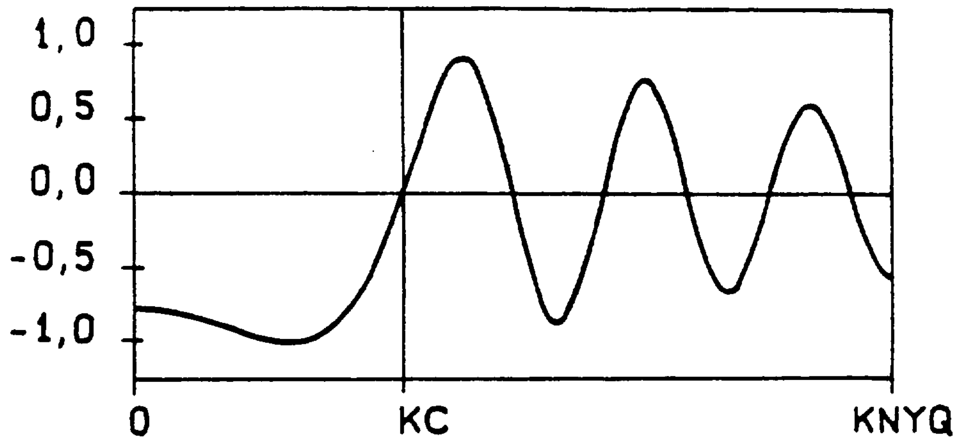


PARTIE IMAGINAIRE DU FILTRE D'EXTRAPOLATION

FIG.2c

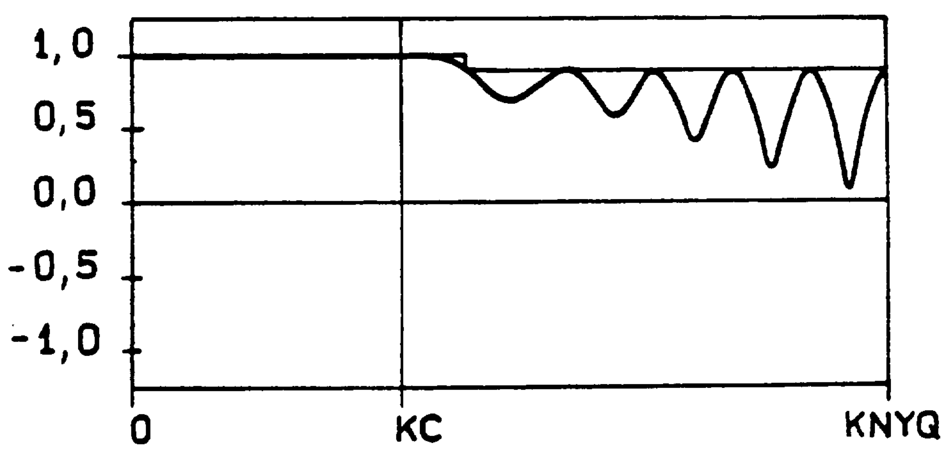


MODULE DU FILTRE D'EXTRAPOLATION

FIG.2d

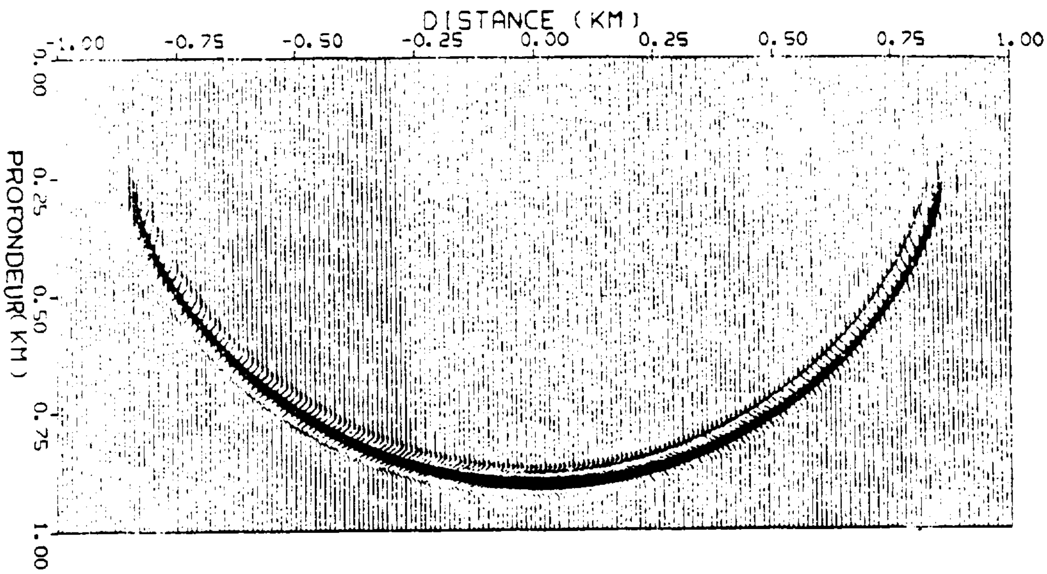


FIG_3

REPONSE IMPULSIONNELLE 2D

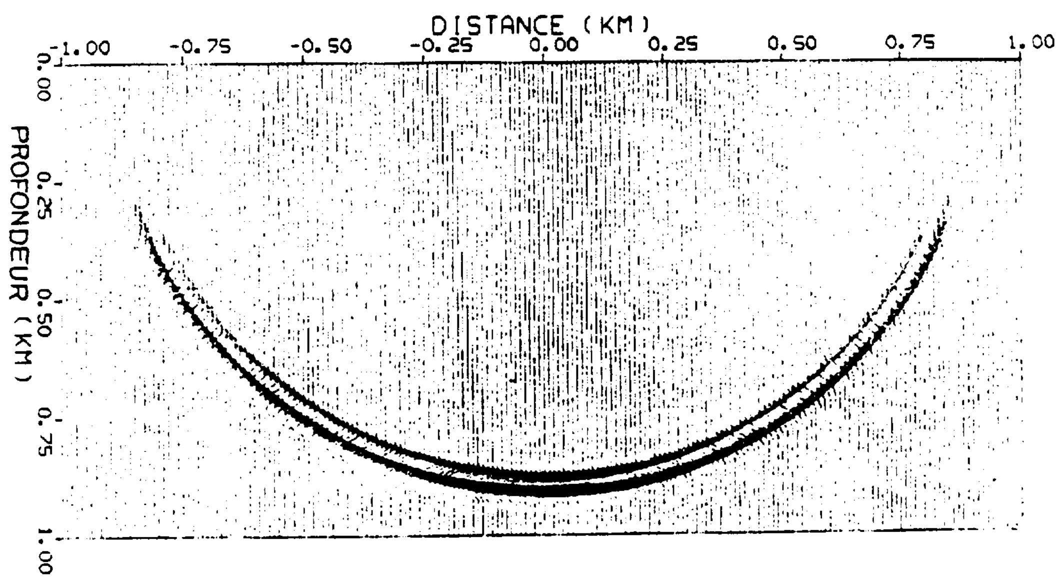


FIG_4

REPONSE IMPULSIONNELLE 3D
LAPLACIEN 17 TERMES
TRANCHE VERTICALE $y = 0$

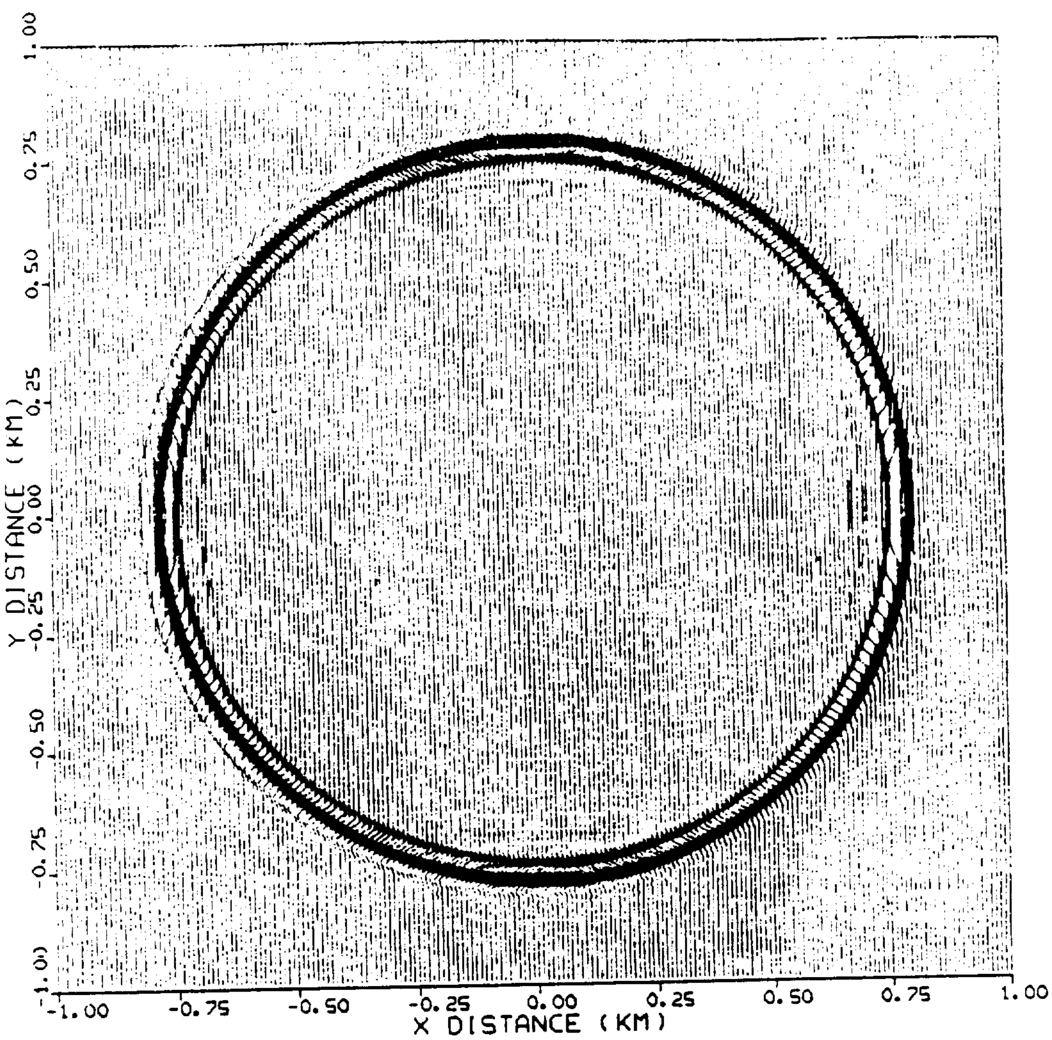


FIG. 5

REPONSE IMPULSIONNELLE 3D
LAPLACIEN 17 TERMES
TRANCHE HORIZONTALE z = 450 m

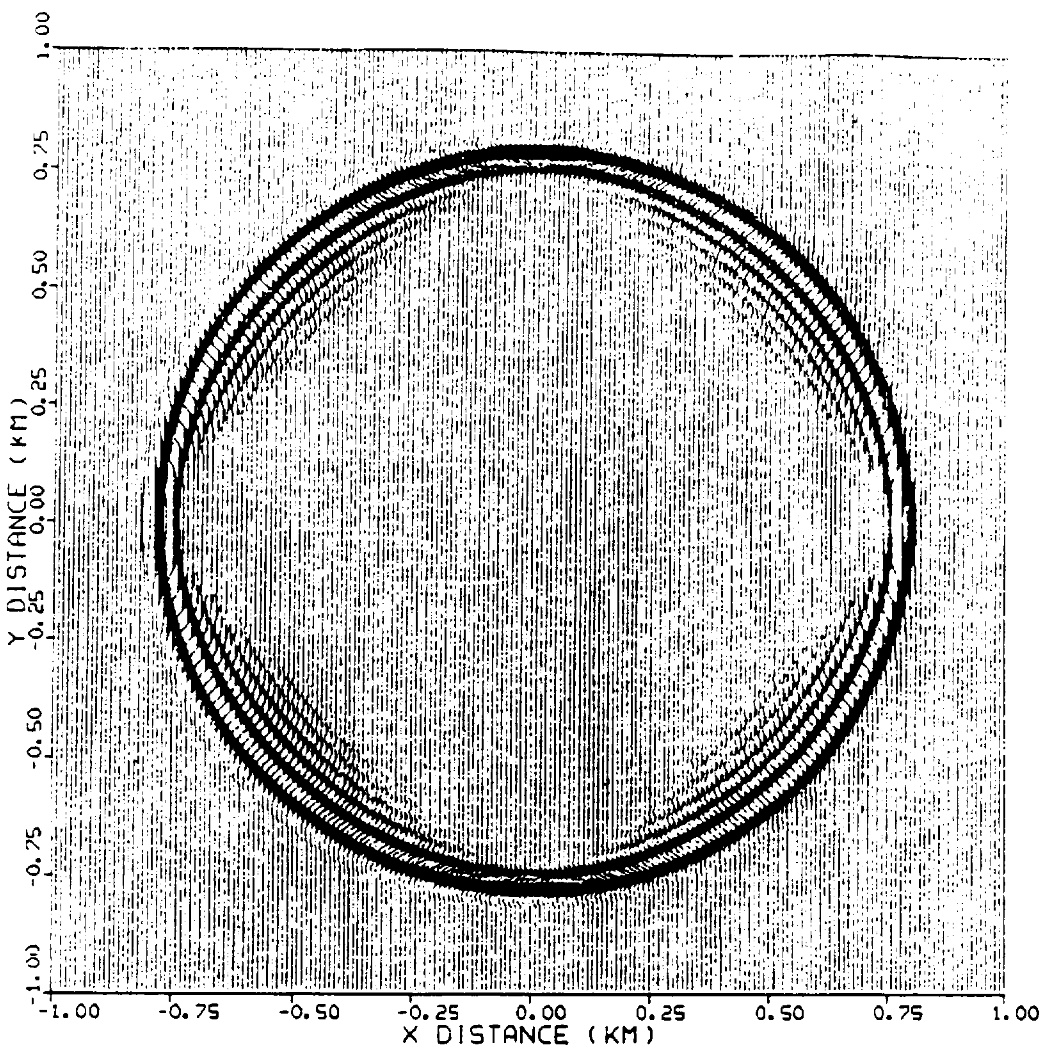


FIG_6

REPONSE IMPULSIONNELLE 3D
TRANSFORMEE DE Mc CLELLAN 17 TERMES
TRANCHE HORIZONTALE z = 450 m

(ETAT DE LA TECHNIQUE)